# EUROPEAN PATENT APPLICATION

(11) **EP 1 571 513 A1**
(43) Date of publication of application: **07.09.2005**
(21) Application number: 03774221.0
(22) Date of filing: 25.11.2003
(51) Int. Cl.: G05B 19/418

(54) **PRODUCTION EVALUATION MANAGING SYSTEM AND MANAGING METHOD**

(30) Priority: 25.11.2002 JP 2002341421
(71) Applicant: Bridgestone Corporation, Tokyo 104-8340 (JP)
(72) Inventor: SHIBAO, Satoshi, BRIDGESTONE CORP. Techical Center, Kodaira-shi, Tokyo 187-8531 (JP); TOMITA, Naoki, BRIDGESTONE CORP. Technical Center, Kodaira-shi, Tokyo 187-8531 (JP)
(74) Representative: Whalley, Kevin
(86) International application number: PCT/JP2003/015036
(87) International publication number: WO 2004/049081

(57) **Abstract**

A production evaluation managing system in a factory including facilities in a plurality of production processes from materials to products and a means for evaluating the products based on at least one of inspection and testing **characterized by** comprising a network connecting the facilities in respective production processes with the evaluating means, and a means for collecting through the network field data of the facility in a production process pertaining to the production of a product corresponding to the information of evaluation results, based on the information of evaluation results of the products outputted from the evaluating means. By this, when a nonconformity is found from the information of evaluation results based on at least one of inspection and testing of the product, field data of the facility in a production process pertaining to production of a product corresponding to the information of evaluation results can be collected and analyzed immediately and the problem with the production process can be investigated immediately in a short time.

## Description

### FIELD OF THE INVENTION

The present invention relates to a factory or a production system provided with facility of a plurality of production processes from materials to products and a means for evaluating the products based on at least one of inspection and testing and particularly to a production evaluation managing system and a production evaluation managing method suitably used for a tire production plant or a tire production system.

### BACKGROUND ART

As a conventional tire production method, such a method has been generally used that stamping components such as an inner liner, a carcass, a bead core, a side rubber, a belt, a tread rubber, etc. cut in the length almost equal to the stamping circumferential length on a molding drum are stamped. However, in order to handle a plurality of tire sizes with this conventional method, the stamping components cut off in accordance with molding drums corresponding to the plural sizes should be prepared for each tire size before the molding process, and a large number of stamping components should be held as an intermediate inventory, which leads to decrease of process space, reduction of production time, difficulty in productivity improvement and so on.

Therefore, several production methods have emerged recently, which can handle various tire sizes, decrease of process space reduction of production time, improvement in productivity, etc. The first example of them is a method to obtain a rubber layer in a desired sectional shape by either one of helical winding or lamination on a molding drum of an elongated rubber ribbon strip with the width of 5 to 50mm and the thickness of 0.3 to 5mm made from a rubber extruded member (See, for example, JP-A2002-127234, JP-A2002-160508, JP-A2002-079590, and JP-A2000-198319). The second example is a method that an inner liner, a carcass and so on are cut in the length for the integral times of the whole laying length and cut pieces are laid in the circumferential direction (See, for example, JP-A2001-328180 and JP-A2002-240162). And the third example is a method that the first and the second methods are made into a continuous process (See, for example, JP-A2002-254529).

In the meantime, since the tire is a component that is important for ensuring vehicle safety and steering stability, shipment after evaluation by inspection and testing as a product has been a custom, particularly for a high-performance tire. However, for the above-mentioned new production methods, even if the decrease of process space, reduction in production time or improvement in productivity is promoted, when a measure is not ready against cases where rework is necessary due to evaluation results based on the tire inspection or testing as a product or a tire itself can not be shipped, further improvement in productivity can not be expected.

Therefore, the first object of the present invention is to immediately investigate a problem in a production process in a short time from a nonconformity found in the evaluation results based on at least one of inspection and testing of a product, particularly, a tire.

Also, the above new production method that a rubber ribbon strip or a small piece that an inner liner, a carcass, etc. is cut into the length of the integral times of the whole stamping length is stamped has a characteristic that can support various production conditions in a flexible manner. Thus, it is the second object of the present invention to solve the nonconformity by advantageously using the characteristic and making use of the solution of the first problem to change the production conditions at an early stage so that further improvement in productivity, tire safety and improvement in vehicle driving stability can be achieved.

### DESCRIPTION OF THE INVENTION

The present invention has been made to solve the above problem, and the gist, construction and action will be described below.

A production evaluation managing system in claim 1 of the present invention is characterized by that, in a factory provided with facilities for a plurality of production processes from materials to products and a means for evaluating the products based on at least one of inspection and testing, comprising a network connecting the facilities in respective production processes with the evaluating means and a means for collecting through the network field information data of the facility in a production process pertaining to the production of a product corresponding to the information of evaluation results, based on the information of evaluation results of the products outputted from the evaluating means.

According to this production evaluation managing system of the present invention, in a factory provided with facilities for a plurality of production processes from materials to products and a means for evaluating the products based on at least one of inspection and testing, a network connects the facilities in the respective production processes with the evaluating means, and based on the information of the evaluation results of the product outputted by the evaluating means which evaluates as nonconformity when a result of at least one of the inspection and testing exceeds a predetermined threshold value, for example, the data collecting means collects through the network field information data of the facilities of the production process pertaining to production of the product corresponding to the information of the evaluation results among a large amount of field information data outputted by the facilities of the plurality of production processes to the network so that, when the nonconformity of the product is found from the information of the evaluation results based on at least one of product inspection and testing, the field information data of the facilities of the production process pertaining to the production of the product corresponding to the evaluation result information can be collected immediately. Therefore, a problem of the production process corresponding to the found nonconformity can be immediately investigated in a short time by analyzing the field information data. The product here includes intermediate products. Also, the threshold value may be set based on a design value or may be set based on the conventional upper and lower limits.

A production evaluation managing system in claim 2 of the present invention is characterized by that, in a factory provided with facilities for a plurality of production processes from materials to products and a means for evaluating the products based on at least one of inspection and testing and where the facilities of the plurality of production processes exist as a plurality of production lines, comprising a network connecting the facilities in respective production processes with the evaluating means and a means for collecting through the network field information data of the facility in a production process pertaining to the production of a product corresponding to the information of evaluation results, based on the information of evaluation results of the products outputted from the evaluating means.

According to this production evaluation managing system of the present invention, particularly in a factory where the facilities of the plurality of production processes exist as a plurality of production lines, the same operational advantage as the above system in claim 1 can be obtained.

A production evaluation managing system in claim 3 of the present invention is characterized by that, in a production system provided with facilities for a plurality of production processes from materials to products and a means for evaluating the products based on at least one of inspection and testing and where the facilities of the plurality of production processes exist as a plurality of production lines and the production lines are arranged in a plurality of factories, comprising a network connecting the facilities in respective production processes with the evaluating means and a means for collecting through the network field information data of the facility in a production process pertaining to the production of a product corresponding to the information of evaluation results, based on the information of evaluation results of the products outputted from the evaluating means.

According to this production evaluation managing system of the present invention, particularly in the production system where the facilities of the plurality of production processes exist as a plurality of production lines and the production lines are arranged in a plurality of factories, the same operational advantage as the above system in claim 1 can be obtained.

A production evaluation managing system in claim 4 is characterized by comprising a data joining means for joining field information of the facilities of the respective production processes collected by the data collecting means in the production evaluation managing system in any of claims 1 to 3.

According to this production evaluation managing system of the present invention, since the field information of the facilities of the respective production systems collected by the data collecting means is joined by the data joining means, when a nonconformity of the product is found from the information of the evaluation results based on at least one of the product inspection and testing, the field information of the facilities of the production process pertaining to production of the product corresponding to the information of the evaluation results can be joined as appropriate so that analysis of the field information data can be made easy and highly accurate. By this, a problem in the production process corresponding to the found nonconformity can be surely investigated in a short time.

A production evaluation managing system in claim 5 is characterized in that, by the field information data collected by the data collecting means based on the information of the evaluation results of the products outputted by the evaluating means, production conditions on the facilities of the production process pertaining to the production of the product corresponding to the information of the evaluation result is changed in the production evaluation managing system in any of claims 1 to 4.

According to this production evaluation managing system of the present invention, since the production conditions on the facilities of the production process pertaining to the production of the product corresponding to the information of the evaluation result is changed by the field information data collected by the data collecting means based on the information of the evaluation results of the products outputted by the evaluating means, when a nonconformity of the product is found from the information of the evaluation results based on at least one of the product inspection and testing, the production conditions can be changed at an early stage so as to solve the nonconformity, by which further improvement in productivity, product safety and moreover, improvement in vehicle driving stability using the product can be achieved.

A production evaluation managing system in claim 6 is characterized in that the production process is a process for molding a pneumatic tire in the production evaluation managing system in any of claims 1 to 5.

According to this production evaluation managing system of the present invention, when a nonconformity of a tire is found from the information of the evaluation results based on at least one of the product inspection and testing in a factory or a production system producing a pneumatic tire, field information data of the facilities of the production process pertaining to the production of the tire corresponding to the information of the evaluation results can be collected immediately, and by analyzing the field information data, a problem in the production process corresponding to the found nonconformity can be immediately investigated in a short time. The tires here include a so-called green tire before vulcanization as an intermediate product.

A production evaluation managing system in claim 7 is characterized in that, in the production evaluation managing system in claim 6, the production process is comprised by a process for molding a green tire that, when producing a product tire in plural sizes chosen from a predetermined group of sizes, the tire in the middle of molding is moved sequentially between stations of a molding system having a plurality of working stations and predetermined tire component members are sequentially assembled according to each of the working stations and a process for vulcanizing the molded green tire.

According to this production evaluation managing system of the present invention, since the production process is a process for molding a green tire, when producing a product tire in plural sizes chosen from a predetermined group of sizes, by moving the tire in the middle of molding sequentially between stations of a molding system having a plurality of working stations and by sequentially assembling tire component members predetermined according to each of the working stations and a process for vulcanizing the molded green tire, when a nonconformity of a product tire is found, a problem in the facilities of the plural working stations of the green tire molding process or the green-tire vulcanization process can be immediately investigated in a short time corresponding to the found nonconformity.

A production evaluation managing system in claim 8 is characterized in that, in the production evaluation managing system in claim 6 or 7, the production process has a process for forming a carcass band by assembling an inner liner member and a carcass member at respective corresponding working stations and a process for assembling a belt member, a tread member and a sidewall member at respective corresponding working stations.

According to this production evaluation managing system of the present invention, since the production process has a process for forming a carcass band by assembling an inner liner member and a carcass member at respective corresponding working stations and a process for assembling a belt member, a tread member and a sidewall member at respective corresponding working stations, when a nonconformity of a product tire is found, a problem of the facilities of the working station for assembling the inner liner member and the carcass member, respectively, in the green tire molding process and the working station for assembling the belt member, the tread member and the sidewall member, respectively, can be immediately investigated in a short time corresponding to the found nonconformity.

A production evaluation managing system in claim 9 is characterized in that, in the production evaluation managing system in any of claims 6 to 8, at least one of the tire component members assembled at the working stations is comprised by a predetermined single type of member element common to the group of sizes and the production process has a process for molding a green tire by assembling the member element under a condition corresponding to each of the tire component member for all the sizes in the group.

According to this production evaluation managing system of the present invention, since at least one of the tire component members assembled at the working stations is comprised by a predetermined single type of member element common to the group of sizes and the production process has a process for molding a green tire by assembling the member element under a condition corresponding to each of the tire component member for all the sizes in the group, a characteristic to support various production conditions of a new production method in the production process in a flexible manner can be used advantageously, and even if a nonconformity occurs in a tire in that case, the nonconformity can be solved by changing the production conditions at an early stage so that further improvement in productivity, tire safety, and moreover, improvement in vehicle driving stability can be achieved.

A production evaluation managing system in claim 10 is characterized in that, in the production evaluation managing system in any of claims 6 to 9, at least one of the tire component members has a rubber ribbon of a predetermined material continuously extruded from a die with a predetermined sectional shape as the member element, and the production process has a process for assembling this tire component member by winding the rubber ribbon helically on a cylindrical or a toroidal molding drum and laminating it in a predetermined sectional shape.

According to this production evaluation managing system of the present invention, since at least one of the tire component members has a rubber ribbon of a predetermined material continuously extruded from a die with a predetermined sectional shape as the member element, and the production process has a process for assembling this tire component member by winding the rubber ribbon helically on a cylindrical or a toroidal molding drum and laminating it in a predetermined sectional shape, a characteristic to support various production conditions of a new production method in the production process in a flexible manner can be used advantageously, and even if a nonconformity occurs in a tire in that case, the nonconformity can be solved by changing the production conditions at an early stage so that further improvement in productivity, tire safety, and moreover, improvement in vehicle driving stability can be achieved.

A production evaluation managing system in claim 11 is characterized in that, in the production evaluation managing system in any of claims 6 to 10, the production process has a process to vulcanize a green tire.

According to this production evaluation managing system of the present invention, since the production process has a process to vulcanize a green tire, when nonconformity of a product tire is found, a problem in the facilities in the process for vulcanizing a tire can be immediately investigated in a short time corresponding to the found nonconformity.

A production evaluation managing system in claim 12 is characterized in that, in the production evaluation managing system in any of claims 6 to 11, the evaluating means outputs an evaluation result of a tire to be inspected through a process for forming a rim / tire assembly by attaching a one-side rim on a one-side bead portion and the other-side rim on the other-side bead portion of the tire to be inspected, respectively, at a rim assembling station and by connecting these one-side and the other-side rims to each other, a process for conveying the rim / tire assembly to a tire inspecting machine placed at an inspection station, and a process for inspecting the tire to be inspected while rotating the rotating shaft and the rim / tire assembly once, after connecting the rim / tire assembly to a rotating shaft of the tire inspecting machine.

According to this production evaluation managing system of the present invention, since the evaluating means outputs an evaluation result of a tire to be inspected through a process for forming a rim/tire assembly by attaching a one-side rim on a one-side bead portion and the other-side rim on the other-side bead portion of the tire to be inspected at a rim assembling station and by connecting these one-side and the other-side rims to each other, a process for conveying the rim/tire assembly to a tire inspecting machine placed at an inspection station, and a process for inspecting the tire to be inspected while rotating the rotating shaft and the rim / tire assembly once, after connecting the rim / tire assembly to a rotating shaft of the tire inspecting machine, time for preparation work at the tire inspecting machine can be reduced and a cycle time for tire inspection can be made shorter. By this, a cycle time for the entire tire production can be reduced, and the evaluating means can output the evaluation result quickly, whereby field information data can be collected quickly by the data collecting means before the field situation is not changed considerably, and the nonconformity can be solved more securely.

A production evaluation managing system in claim 13 is characterized in that, in the production evaluation managing system in claim 12, a tire inspecting machine for performing different types of inspection is arranged respectively at a plurality of inspection stations, and the evaluating means is to convey the tire to be inspected sequentially to the tire inspecting machine for performing the different types of inspection in the state of the rim/tire assembly.

According to this production evaluation managing system of the present invention, since a tire inspecting machine for performing different types of inspection is arranged respectively at a plurality of inspection stations, and the evaluating means is to convey the tire to be inspected sequentially to the tire inspecting machine for performing the different types of inspection in the state of the rim / tire assembly, a cycle time for tire inspection can be made shorter and by this, a cycle time for the entire tire production can be reduced, and the evaluating means can output the evaluation result more quickly, whereby field information data can be collected more quickly by the data collecting means, and the nonconformity can be solved more securely.

In the mean time, a production evaluation managing method in claim 14 is characterized in that, in a factory provided with facilities for a plurality of production processes from materials to products and a means for evaluating the products based on at least one of inspection and testing, when evaluating and managing the production process, the facilities of the respective production process has sent field information data to a network connecting the facilities of the respective production process with the evaluating means, and a means for collecting data selects and collects, based on information of evaluation results of the products outputted by the evaluating means, the field information data of the facilities of the production process pertaining to production of the product corresponding to the information of the evaluation results among the field information data sent through the network.

According to this production evaluation managing method of the present invention, since the network connects the facilities of the respective production processes with the evaluating means and when a result of at least one of inspection and testing exceeds a predetermined threshold value, for example, it is evaluated as nonconformity, and based on the information of the evaluation results of the product outputted by the evaluating means, the data collecting means selects and collects the field information data of the facilities of the plurality of production process pertaining to production of the product corresponding to the information of the evaluation results among a large amount of the field information data sent through the network, when a nonconformity of a product is found from the information of the evaluation results based on at least one of product inspection and testing, field information data of the facilities of the production process pertaining to the production of the product corresponding to the information of the evaluation results can be immediately collected. And by analyzing the field information data, a problem in the production process corresponding to the found nonconformity can be immediately investigated in a short time. The products here include intermediate ones. Also, the threshold value may be set based on a design value, but it may also be set based on conventional upper and lower limits.

A production evaluation managing method in claim 15 is characterized in that, in a factory provided with facilities for a plurality of production processes from materials to products and a means for evaluating the products based on at least one of inspection and testing and where facilities of the plurality of production processes exist as a plurality of production lines, when evaluating and managing the production process, the facilities of the respective production process has sent field information data to a network connecting the facilities of the respective production process with the evaluating means, and a means for collecting data selects and collects, based on information of evaluation results of the products outputted by the evaluating means, the field information data of the facilities of the production process pertaining to production of the product corresponding to the information of the evaluation results among the field information data sent through the network.

According to this production evaluation managing method of the present invention, particularly in a factory where facilities of a plurality of production processes exist as a plurality of production lines, the same operational advantage as the above method in claim 13 can be obtained.

A production evaluation managing method in claim 16 is characterized in that, in a production system provided with facilities for a plurality of production processes from materials to products and a means for evaluating the products based on at least one of inspection and testing and where facilities of the plurality of production processes exist as a plurality of production lines and the production lines are arranged in a plurality of factories, when evaluating and managing the production system, the facilities of the respective production process has sent field information data to a network connecting the facilities of the respective production process with the evaluating means, and a means for collecting data selects and collects, based on information of evaluation results of the products outputted by the evaluating means, the field information data of the facilities of the production process pertaining to production of the product corresponding to the information of the evaluation results among the field information data sent through the network.

According to this production evaluation managing method of the present invention, particularly in a production system where facilities of a plurality of production processes exist as a plurality of production lines and the production lines are arranged in a plurality of factories, the same operational advantage as the above method in claim 13 can be obtained.

A production evaluation managing method in claim 17 is characterized in that, in the production evaluation managing method in any of claims 14 to 16, the field information of the facilities of the respective production processes collected by the data collecting means is joined by a data joining means.

According to this production evaluation managing method of the present invention, since the field information of the facilities of the respective production processes collected by the data collecting means is joined by the data joining means, when a nonconformity of the product is found from the information of the evaluation results based on at least one of the product inspection and testing, the field information of the facilities of the production process pertaining to production of the product corresponding to the information of the evaluation results can be joined as appropriate so that analysis of the field information data can be made easy and highly accurate. By this, a problem in the production process corresponding to the found nonconformity can be surely investigated in a short time.

A production evaluation managing method in claim 18 is characterized in that, in the production evaluation managing method in any of claims 14 to 17, by the field information data collected by the data collecting means based on the information of the evaluation results of the products outputted by the evaluating means, production conditions on the facilities of the production process pertaining to the production of the product corresponding to the information of the evaluation result is changed.

According to this production evaluation managing method of the present invention, since the production conditions on the facilities of the production process pertaining to the production of the product corresponding to the information of the evaluation result is changed by the field information data collected by the data collecting means based on the information of the evaluation results of the products outputted by the evaluating means, when a nonconformity of the product is found from the information of the evaluation results based on at least one of the product inspection and testing, the production conditions can be changed at an early stage so as to solve the nonconformity, by which further improvement in productivity, product safety and moreover, improvement in vehicle driving stability using the product can be achieved.

### BRIEF DESCRIPTION OF THE DRAWINGS

Fig. 1 is a layout diagram showing a tire production system provided with a tire production evaluation managing system according to a preferred embodiment of the present invention.
Fig. 2 is a layout diagram of a tire molding system.
Fig. 3 is a sectional view showing a tire in middle of molding.
Fig. 4 is a sectional view showing a tire in middle of molding.
Fig. 5 is a sectional view showing a tire in middle of molding.
Fig. 6 is a sectional view showing a tire in middle of molding.
Fig. 7 is a sectional view showing a tire in middle of molding.
Fig. 8 is a sectional view showing a tire in middle of molding.
Fig. 9 is an explanatory view showing a ribbon lamination method.
Fig. 10 is an explanatory view showing a predetermined-width narrow-piece method.
Fig. 11 is a layout diagram of a tire vulcanization system.
Fig. 12 is a side view showing a mobile vulcanization unit.
Fig. 13 is a front view showing a vulcanization unit and a mold opening/closing station.
Fig. 14 is a plan view showing a vulcanization unit and a mold opening/closing station.
Fig. 15 is a plan sectional view showing one example of a tire inspection system.
Fig. 16 is a partially broken front view of the tire inspection system.
Fig. 17 is a partially broken front view of another example of a tire inspection system.
Fig. 18 is a constitutional view showing a tire production evaluation managing system according to the above preferred embodiment of the present invention.

### BEST MODE FOR CARRYING-OUT OF THE INVENTION

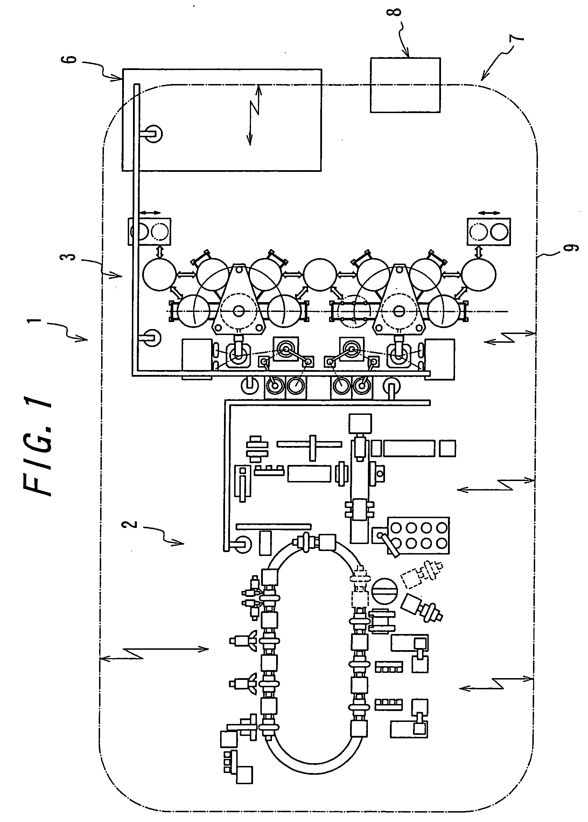

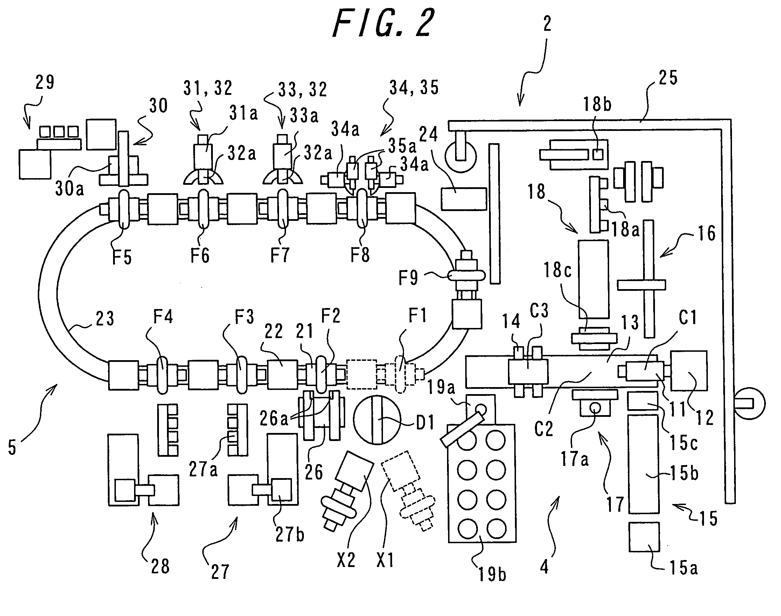

A tire production evaluation managing system as a preferred embodiment of a production evaluation managing system of the present invention and a tire production system provided with it for carrying out the production evaluation managing method of the present invention applied to production of a tire as a product will be described in detail below referring to Figs. 1 through 18. Fig. 1 is a plan layout diagram of a tire production system 1, and this tire production system 1 is provided with a tire molding system 2, a tire vulcanization system 3, a tire inspection system 6 and a tire production evaluation managing system 7 of the above preferred embodiment. First, based on the plan layout diagram of the tire molding system 2 shown in Fig. 2, the tire molding system 2 and a production method in molding a green tire will be explained.

The tire molding system 2 is comprised by a first molding unit 4 and a second molding unit 5 arranged adjacent to each other. The first molding unit 4 is provided with three working stations C1, C2 and C3, a first molding carriage 12 supporting a cylindrical molding drum 11 and rotating this drum 11 around a main shaft, a transfer carriage 14 and a straight track 13 for moving the first molding carriage 12 among the working stations C1, C2 and C3.

The second molding unit 5 is provided with nine working stations F1 through F9, a second molding carriage 22 supporting a toroidal molding drum 21 and rotating this drum 21 around the main shaft, an endless track 23 for moving the second molding carriage 22 among the working stations F1 through F9 in the clockwise order in this Fig., a green-tire transfer carriage 24 and a green-tire conveyer 25 for conveying a green tire to a vulcanization system.

The first molding carriage 12 on which the cylindrical molding drum 11 is loaded repeats movement in a predetermined tact time in the order of the working station C1 to C2, from C2 to C3 and from C3 to C1. The transfer carriage 14 moves back and forth between the working stations C3 and F1. Also, the second molding carriage 22 on which the toroidal molding drum 21 is loaded repeats clockwise movement in a predetermined tact time between the respective working stations as from the working station F1 to F2. In the example of the tire molding system 2 according to the preferred embodiment shown in the Fig., there are provided one unit of the first molding carriage 12 and eight units of the second molding carriages 12. Also, each of the carriages 12 and 22 is moved between the stations by a driving device, not shown, and after being stopped at the respective stations, it is positioned by a positioning device provided at each of the stations with high accuracy.

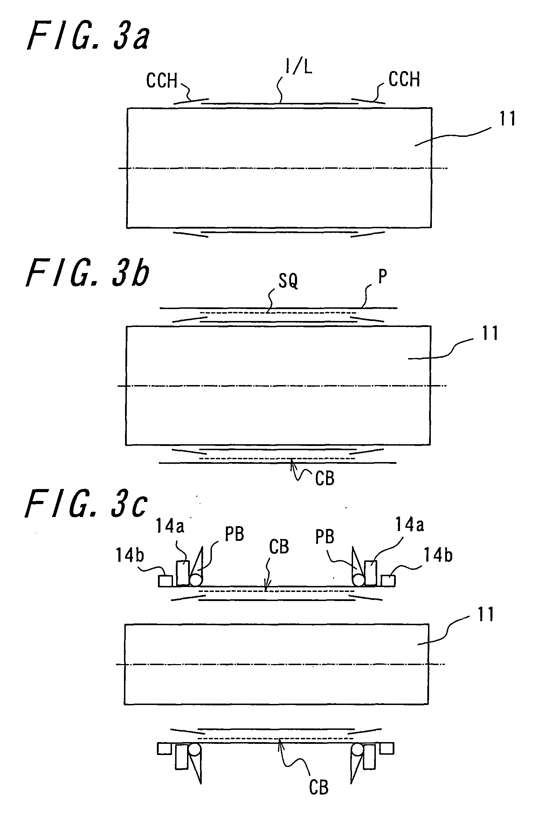

Figs. 3 to 8 are meridian sectional views showing a tire in the middle of molding using this molding system 2 at each of the stations. First, as shown in Fig. 3(a), at the working station C1, an inner liner member IL and a canvas chafer member CCH arranged on its outer circumference in the radial direction are assembled to the cylindrical molding drum 11 using an inner liner member assembling device 15 and a canvas chafer member assembling device 16, respectively. And then, the cylindrical molding drum 11 is moved to the working station C2, where as shown in Fig. 3(b), a single layer or two layers of a squeegee member SQ and a single layer or two layers of carcass member P are assembled outside of the inner liner member IL and the canvass chafer member CCH in the radial direction using a squeegee member assembling device 17 and a carcass member assembling device 18 so as to form a carcass band CB.

In Fig. 3(b), an example with a single layer of the squeegee member SQ and the carcass member P is shown, but when they are used in two layers, they are assembled in the order of the inner layer squeegee member SQ, the inner layer carcass member, the outer layer squeegee member SQ and the outer layer carcass member P. Also, the cylindrical molding drum 11 is divided in the circumferential direction and constituted capable of expansion and contraction with a plurality of segments expanding and contracting in the radial direction, and these members are arranged on the circumference of the cylindrical molding drum 11 in the expanded diameter state.

In the meantime, at the working station C3, a pair of preset beads PB in which a bead filler has been preset on a bead core is set at the transfer carriage 14. And as shown in Fig. 3(c), the carcass band CB is arranged inside of the set pair of preset beads PB in the radial direction. That is, the transfer carriage 14 is provided with a bead gripping ring 14a capable of expansion and contraction for gripping the preset bead PB from the side, respectively, and a band gripping ring 14b capable of expansion and contraction for gripping the carcass band CB from outside in the radial direction, and at the working station C3, the preset bead PB is taken out of a bead stock 19b using a bead handling robot 19a, transferred onto the bead gripping ring 14a to be held by the bead gripping ring 14a and then, the transfer carriage 14 is made to standby in this state. Then, the cylindrical molding drum 11 with the carcass band CB assembled is inserted inside the set pair of preset beads PB in the radial direction up to a predetermined position in the axial direction, the diameter of the band gripping ring 14b is reduced and the carcass band CB is gripped from outside in the radial direction. And then, the diameter of the cylindrical molding drum 11 is reduced so as to transfer the carcass band CB from the cylindrical molding drum 11 to the transfer carriage 14.

In this preferred embodiment, the preset bead PB in which the bead filler and the bead core have been preset in advance is set on the transfer carriage 14, but instead, at the working station C3, only the bead core may be set on the transfer carriage 14 and the bead filler may be assembled at the working station F2, whose details will be described later or an exclusive working station which is added.

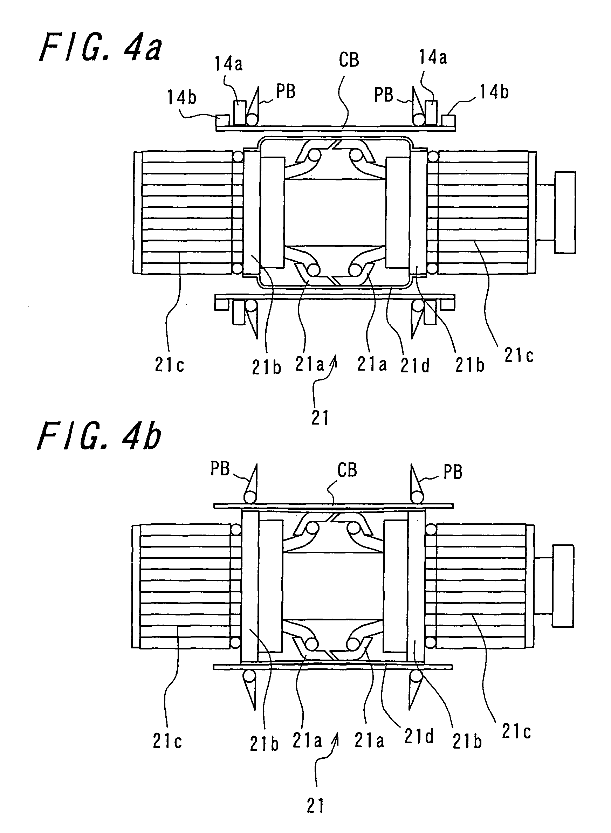

Next, as shown in Fig. 4(a), the transfer carriage 14 gripping the preset bead PB and the carcass band CB is moved to the working station F1 where the toroidal molding drum 21 is standing by, and as shown in Fig. 4(b), there members are transferred onto the toroidal molding drum 21.

This step will be described in detail as follows. The toroidal molding drum 21 is provided with a right and left pair of core bodies 21a made of a plurality of rigid segments adjacent to each other in the circumferential direction capable of expansion and contraction, a right and left pair of bead lock portions 21b similarly made of rigid segments adjacent to each other in the circumferential direction capable of expansion and contraction, a carcass folding rod 21c provided at the right and left axial ends and arranged in plural in the circumferential direction, and a center bladder 21d made of a flexible material which is arranged outside of the core body 21a in the radial direction and expanded in the toroidal state when an internal pressure is applied, and the core body 21a, the bead lock portion 21b and the carcass folding rod 21c on the same right or left side are provided on a right or a left slider, respectively, so that these 21a, 21b and 21c can be displaced integrally inside and outside in the axial direction.

And the toroidal molding drum 21 moves the transfer carriage 14 to the station F1 while gripping the preset bead PB with the bead gripping ring 14a and the carcass band CB with the band gripping ring 14b and arrange them outside the toroidal molding drum 21 standing by with the bead lock portion 21b in the reduced-diameter state beside the shaft end side, the diameter of the bead lock portion 21b is expanded and the preset bead PB is fixed to the toroidal molding drum 21. And then, the diameters of the bead gripping ring 14a and the band gripping ring 14b are expanded to release the grip, and the transfer carriage 14 is retreated and returned to the station C3. In this way, the preset bead PB and the carcass band CB can be transferred onto the toroidal molding drum 21.

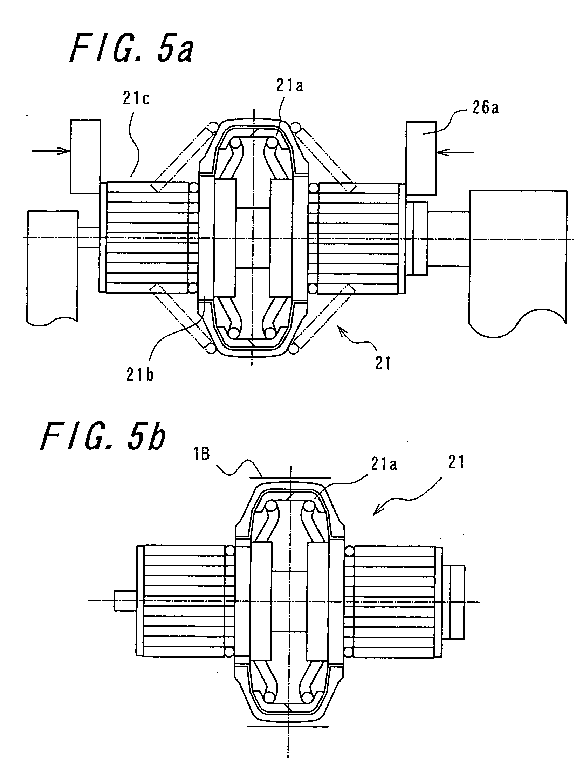

Then, as shown in Fig. 5(a), the toroidal molding drum 21 is moved to the working station F2, and the center part in the width direction of the carcass band CB is expanded in the toroidal state, and then, the side portion of the carcass member P is folded back outside in the radial direction. This operation is performed as follows.
An internal pressure is applied to the center bladder 21d so as to expand while the sliders on the both sides on which the bead lock portion 21b and so on are loaded are moved to the center in the axial direction, and by expanding the diameter of the right and left core bodies 21a at the same time, the center part in the width direction of the carcass band CB is expanded in the toroidal state. In the middle of this expansion and diameter-expansion, a claw 26a provided on an external driving device 26 is moved toward the center in the axial direction and the end outside in the axial direction of the carcass folding rod 21c is moved toward the center in the axial direction, and then, the end inside in the axial direction of the folding rod 21c can fold the side portion of the carcass member P along the side surface of the core body 21a whose diameter is partially expanded around the preset bead PB with a link mechanism, not shown. After that, the diameter of the core body 21a is expanded to the maximum so as to support the members to be subsequently assembled from inside in the radial direction for functioning, by this, assembling accuracy of these members can be improved.

Also, at this working station F2, a waveform of radial run-out of the carcass band CB expanded in the toroidal state is measured for one circumference. Here, the waveform of the radial run-out of the carcass band expanded in the toroidal state refers to the waveform of change in the radius in the circumferential direction from the center of rotating axis of the molding drum at the center in the width direction of the expanded carcass band. And a phase ψ of its primary harmonic component and an amplitude Y are fed back to operation of the working stations C3 and F1, explained above. That is, it is so constituted that, as for one of both bead gripping rings 14a on the transfer carriage 14 standing by at the working station C1, the orientation of the shaft center is controlled in a predetermined direction, in the horizontal plane, for example, without steps. At the working station C1, after the preset bead PB is set on the bead gripping ring 14a, the shaft center of the bead gripping ring 14a is decentered by an angle a uniquely obtained by the amplitude Y measured at the working station F2. Here, the angle a means an angle required to cancel the amplitude Y.

And at the working station F1, before bead lock, the tire molding drum 21 set at a reference position in the circumferential direction is rotated by the phase ψ measured at the working station F2. By these operations, information of the primary harmonic component of the radial run-out of the carcass band CB expanded in the toroidal state is fed back to a tire to be molded after this measurement so as to cancel the primary harmonic component of the radial run-out, the radial run-out can be improved and thereby the level of RVF of the product tire in relation with it can be improved.

Also, the bladder 21d is provided at the molding drum 21 and this is expanded in the toroidal state by applying an internal pressure into this bladder 21d so as to expand the carcass band CB. However, the carcass band CB can be expanded without using the bladder 21d, and in that case, a rubber seal for sealing the internal pressure is mounted on the outer circumferential surface of the bead lock portion 21b, and the expansion is performed by applying an internal pressure into the space surrounded by the bead lock portion 21b and the carcass band CB.

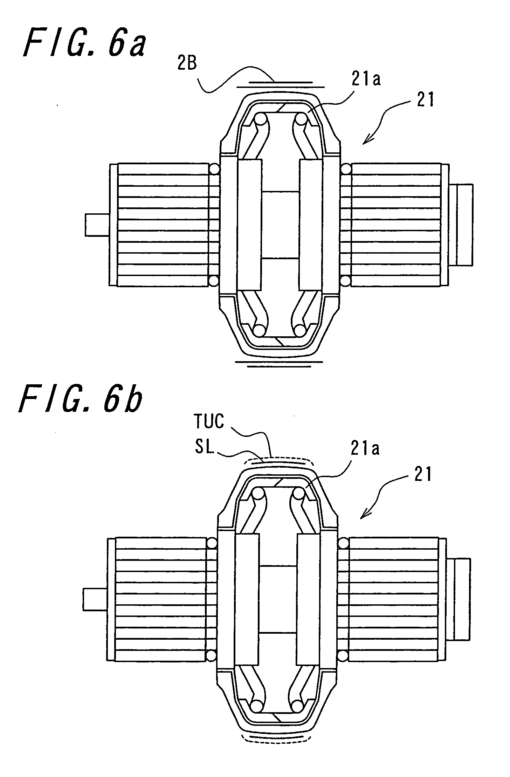

And the following operation is carried out by moving the molding drum 21 sequentially to the working stations F3 through F8. At the working station F3, using an inner layer belt member assembling device 27, as shown in Fig. 5(b), an inner layer belt member 1B is assembled with the core body 21a whose diameter has been expanded as the basis, and then, at the working station F4, using an outer layer belt member assembling device 28, as shown in fig. 6(a), an outer layer belt member 2B is assembled.

At the working station F5, using a spiral layer member assembling device 29 and a tread under-cushion member assembling device 30, as shown in Fig. 6(b), a spiral layer member SL is assembled and then, a tread under-cushion member TUC is assembled on its outside in the radial direction.

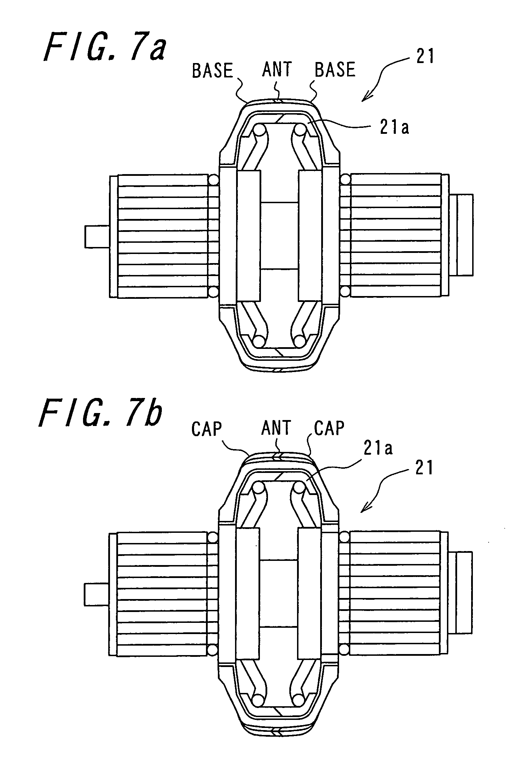

At the working station F6, using a base tread member assembling device 31 and an antenna member assembling device 32, as shown in Fig. 7(a), base tread members BASE to be arranged on both sides in the tire axial direction and an antenna member ATN with high conductivity to be arranged adjacent to these members at the center in tie tire axial direction are assembled, and then, at the working station F7, using a cap tread member assembling device 33 and the antenna member assembling device 32, as shown in Fig. 7(b), cap tread members CAP to be arranged on both sides in the tire axial direction and the antenna member ATN with high conductivity to be arranged adjacent to these members at the center in the tire axial direction are assembled.

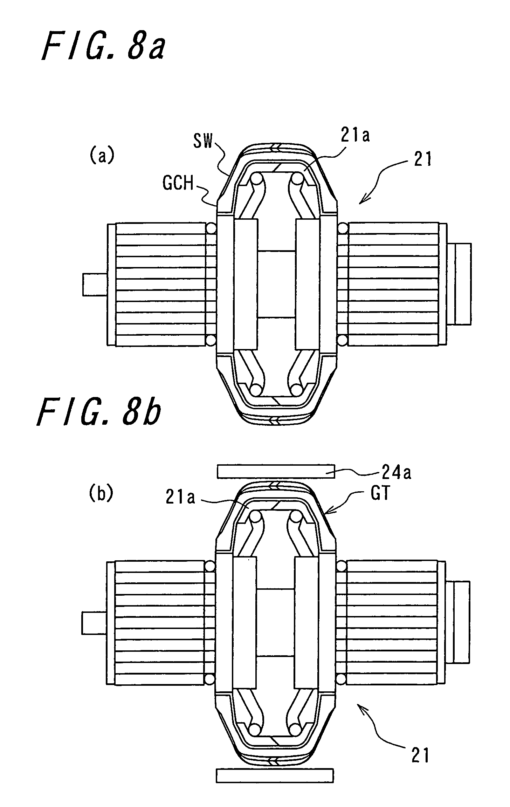

At the working station F8, as shown in Fig. 8(a), a sidewall member SW is assembled on both side surfaces of a tire in the middle of molding using a sidewall member assembling device 34, and then, a rubber chafer member GCH is assembled on its inside in the radial direction using a rubber chafer member assembling device 35.

As mentioned above, since the molding drum 21 is provided with the bead lock portion 21b, the shaping bladder 21d and the core body 21a whose diameter is expanded / reduced, operations from toroidal expansion of the carcass band CB even to assembling of the belt member and the tread member can be performed on this drum 21 while bead-locking the tire in the middle of molding, and tire quality such as uniformity can be improved as compared with the conventional molding method in which the bead lock of the tire in the middle of molding should be released for transfer between working stations during these operations.

At the last working station F9, after operations such as application of a bar code or the like, a finished green tire GT is taken out of the molding drum 21 and transferred to the green-tire transfer carriage 24. The green-tire transfer carriage 24 is provided with a gripping ring 24a capable of expansion and contraction for gripping the green tire GT from outside in the radial direction, and at transfer of the green tire GT from the molding drum 21 to the transfer carriage 24, the transfer carriage 24 in the state where the diameter of the gripping ring is expanded is moved to the working station F9 where the molding drum 21 is standing by.

And after the outer periphery of the finished green tire GT is held by reducing the diameter of the griping ring, the tire transfer carriage 24 gripping the green tire GT can be retreated from the working station F9 by reducing the diameter of the molding drum 21. After that, the green tire GT is transferred from the green-tire transfer carriage 24 to the green-tire conveyer 25, and this is conveyed to the tire vulcanization system 3. Also, the second molding carriage 22 is further moved clockwise on the endless track 23 so as to deliver the molding drum 21 to the working station F1.

The above explanation has been made on the tire of the size formed by assembling all the tire component members prepared at this tire molding system 2, but for a tire of the size not using some of the tire component members, the operations corresponding to them are merely skipped.

Also, the tire component members to be assembled at this system 2 are not limited to those mentioned above, but they can be added/reduced as appropriate according to a group of sizes to be handled by this system 2. Moreover, arrangement including the tracks 13 and 23 is not limited to the above but can be chosen as appropriate according to production conditions, space restriction, etc. In the example shown in Fig. 2, for example, the working stations F1 through F8 are provided on both straight portions in parallel with each other constituting the track 23, but they can be provided only on one of the straight portion, which makes an elongated layout in this case.

With the conventional system, it was impossible to mold a mixture of different sizes of green tires in a predetermined tact time, since size switching of respective tire component members and complicated molding drums requires a lot of time. However, with the molding system 1 according to this preferred embodiment, optional two different sizes of green tires chosen from a predetermined group of sizes can be molded continuously in a predetermined tact time, which will be described below.

The first assembling method of tire component members for enabling molding of a mixture of different sizes is a method for assembling the tire component members by helically winding a rubber ribbon of a predetermined material continuously extruded through a die with a predetermined sectional shape on a cylindrical or a toroidal molding drum and by laminating it in a predetermined sectional shape. For the convenience, this method is called as "ribbon lamination method" in this specification.

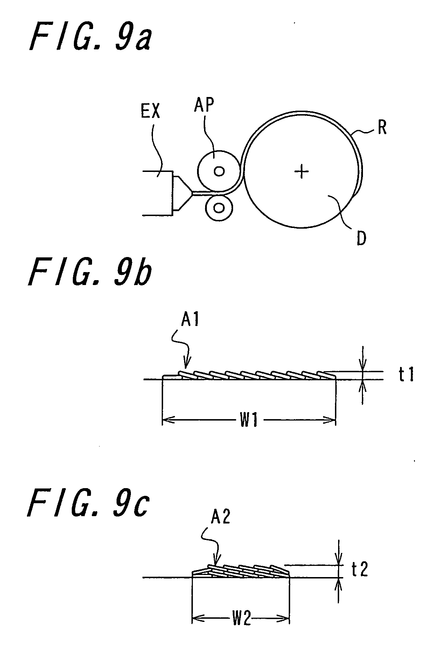

Fig. 9 is a view explaining this method, and this ribbon lamination method is, as schematically shown in a side view in Fig. 9(a), a rubber ribbon R is continuously extruded from an extruder EX having a die in a predetermined sectional shape, and this ribbon R is held by a ribbon applying device AP while rotating a body of rotation D and this ribbon R is helically laminated on the circumference of the body of rotation D while controlling its position and angle so as to form a laminated body in a required sectional shape. As the laminated body is shown in sectional views in Figs. 9(b) and (c), according to this method, both a laminated body A1 with the width of W1 and the thickness of t1 and a laminated body A2 with the width of W2 and the thickness of t2 can be formed using the rubber ribbon R with the same sectional shape. By this, it is possible to assemble tire component members corresponding to different sizes without requiring time for switching by programming a track for the ribbon applying device AP corresponding to each of a group of sizes in advance and by choosing a program to be performed according to the size.

The second assembling method of tire component members for enabling molding of a mixture of different sizes is a method for assembling the tire component members by cutting a continuous sheet with a predetermined width made of a predetermined material into a predetermined length for each size and joining pieces in the number predetermined for each size so that the cut surfaces of the cut pieces are aligned on the molding drum in the circumferential direction. For convenience, this method is called as "predetermined-width narrow-piece method" in this specification.

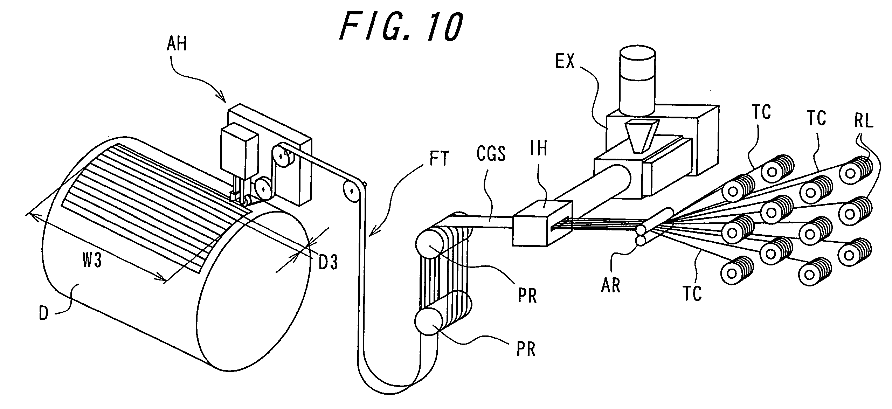

Fig. 10 is a view explaining this method using a rubber member with cord as an example, this predetermined-width narrow-piece method is a method that surface-treated cords TC are reeled out of a plurality of reels RL and aligned through an aligning roller AR, a coated rubber is extruded from the extruder EX, the cord TC is made to pass through an insulation head IH to be coated with rubber to have a rubber strip with cord CGS with a predetermined width, this strip CGS is made to pass through a pull roller PR and a festoon FT to be guided to an applying head AH, and after this strip CGS is disposed on the body of rotation D by the applying head AH in parallel with the axis of the body of rotation or at an inclined angle, the strip CGS is cut into a cut length corresponding to a width W3 of this tire component member on the body of rotation D. Then, the body of rotation D is rotated by an angle corresponding to the circumferential length obtained by subtracting a joining margin from the width of this strip CGS along the circumferential direction of the body of rotation and the above operation of the applying head AH is repeated for the number of times determined according to the size so that this member is assembled for one cycle around the tire.

According to this method, if the dimension obtained by subtracting the joining margin from the strip width D3 is set to a common denominator of the circumferential length of this tire component member corresponding to all the above target group of sizes, all these sizes can be supported only by changing the cut length W3 and the number of pieces to be applied according to the size.
By this, by programming a movement stroke and the number of movement times of the applying head AH in advance corresponding to each of the group of sizes and choosing a program to be performed according to the size, the tire component member can be assembled corresponding to different sizes without requiring time for switching.

In this tire molding system 2, the squeegee member SQ, the tread under-cushion member TUC, the base tread member BASE, the cap tread member CAP, the antenna member ATN, the sidewall member SW and the rubber chafer member GCH among the above mentioned tire component members are assembled by the above ribbon lamination method. And at each of the assembling devices corresponding to these members, extruders 17a, 30a, 31a, 32a, 33a, 34a and 35a are provided, respectively, in the order of these members.

In the meantime, the inner liner member IL, the inner and outer layer carcass members P and the inner and outer layer belt members 1B and 2B are assembled by the above predetermined-width narrow-piece method. In assembling the inner liner member IL, a simple rubber sheet with a predetermined-width is extruded from the extruder 15a as a strip to be used for it, instead of the rubber strip with cord in Fig. 10, and this is cut on the conveyer 15b to the length according to the targeted tire size. The cut narrow-pieces are sequentially joined on a transfer drum 15c to form a sheet for a single tire, the transfer drum is rotated so that it is circumscribed to the cylindrical molding drum 11, and these drums 11 and 15c are rotated in synchronization so that this sheet is transferred onto the molding drum 11 so as to assemble the inner liner member IL.

When assembling the carcass member P, after a plurality of cords reeled out of a reel stand 18a are aligned, rubber is extruded from the extruder 18b and the cord is coated with rubber, and the rubber strip with cord CGS formed at this stage is applied onto the transfer drum 18c. On this, it is cut into a predetermined length according to the targeted tire size and the cut narrow-pieces are joined together in the predetermined number to prepare a carcass member sheet for a single tire, and then, the transfer drum 18c is moved to circumscribe the cylindrical molding drum 11 and these drums 11 and 18c are rotated in synchronization so that the sheet is transferred onto the molding drum 11 to assemble the carcass member P.

For the tire size in the structure in which two layers of the carcass member P are assembled, after both layers of the carcass member for a single tire are aligned on the transfer drum 18c in the circumferential direction, the transfer drum 18c is brought into contact with the molding drum 11 at the assembling timing of the respective members or separated.

For the inner layer belt member 1B, after a plurality of cords reeled out of a reel stand 27a are aligned, rubber is extruded from the extruder 27b and the cord is coated with rubber, and the rubber strip with cord CGS formed at this stage is directly applied onto the molding drum 21. But since it is necessary to apply this along the cord in the direction inclined to the tire axis, the molding drum 21 is rotated and synchronized with it and the applying device is moved in the axial direction to apply the narrow-pieces. The outer layer belt member 2B is assembled similarly.

The members other than the above members assembled by the ribbon lamination method or the predetermined-width narrow-piece method are assembled as follows. The canvas chafer member CCH is assembled by reeling out a roll with a predetermined width formed in another process, cutting it to a length corresponding to a required circumferential length and winding it around the molding drum 11, but the axial position for winding is constituted variably. Also, the width of the canvas chafer member CCH is shared by as many sizes as possible within a range not affecting the tire performance.

The preset bead PB is prepared in a bead stock 19b for each size, and a bead handling robot 19a takes up the preset bead PB of different sizes according to the requested size to support many sizes.

For the spiral layer member SL, a roll of rubber with cord with a narrow width is set, and this is reeled out and wound helically on the molding drum 21 to assemble this member, but different sizes can be supported by changing the number of winding times for each size.

The cylindrical molding drum 11 is constituted so that is can support tire component members with different axial widths and diameters, while the toroidal molding drum 21 is constituted capable of optional change of an interval between the right and left bead lock portions 21b and the core bodies 21a so that tire component members with different axial widths can be supported. However, tires with different rim diameters are supported by replacing the toroidal molding drum 21, but the second molding unit 5 is so constituted that the drum can be replaced in a predetermined tact time.

That is, in the second molding unit 5, a rail portion of the endless track 23 corresponding to the working station F1 is provided movably on a drum switching station D1 arranged outside this track, and this drum switching station D1 is constituted capable of rotating the moved rail portion at a predetermined angle. In order to switch the size of the molding drum 21, first, the molding carriage 22 on which the molding drum 21 to be ejected is loaded is fixed to the rail at the working station F1, and then, the rail portion with this molding carriage 22 loaded is moved to the drum switching station D1 and it is rotated so that the rail of an empty carriage storage site X1 is coupled to the moved rail portion and the molding drum 21 is ejected together with the molding carriage 22 to the carriage storage site X1. Then, the drum switching station D1 is further rotated so that the moved rail portion is coupled to the rail of a carriage storage site X2, the molding carriage 22 on which the new sized molding drum 21 having waited at the carriage storage site X2 is loaded is moved into the drum switching station D1. And after this is rotated, this is returned with the rail portion to the working station F1 so that the molding drum 21 can be replaced in a short time.

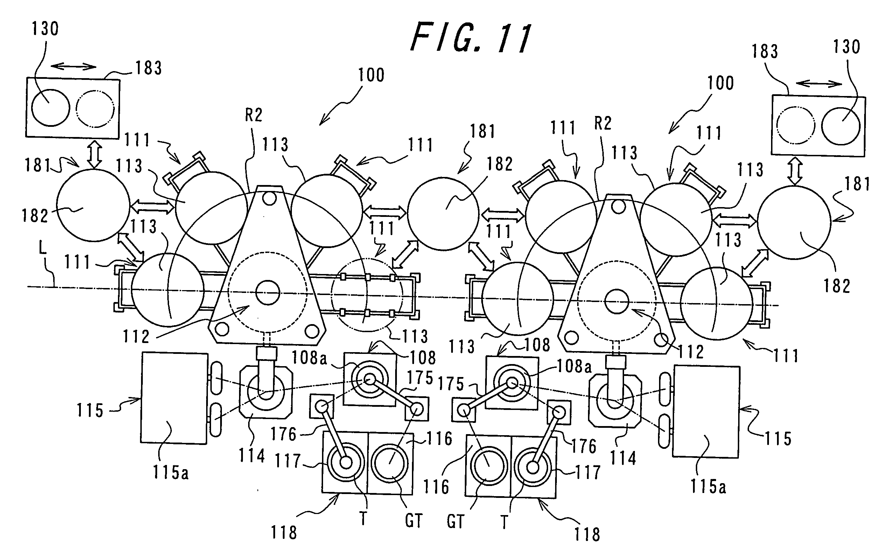

Next, the tire vulcanization system 3 constituting the tire production system 1 will be explained. Fig. 11 is a schematic plan view showing the tire vulcanization system 3 in the case where similar two vulcanization systems 100 are disposed adjacent to each other.
In the following explanation, the term of an "uncured tire" or a "tire before vulcanization" has the same meaning as a green tire.

In each of the vulcanization systems 100, a single mold opening closing station 112 is arranged, and with the mold opening/closing station 112 as the center, four units of the vulcanization stations 111 are arranged on an arc R2 on one side of a straight line L connecting the centers of the respective mold opening/closing stations 112 of the two vulcanization systems 100. On the outside portion of the arc R2, a die relay station 181 is provided at an almost equal distance from each of at least two vulcanization stations 111, and a die input/output device 182 preferably in the structure of a turn table is provided for taking out a used vulcanization die from the respective vulcanization stations 111 close to this die relay station 181 and inputting a vulcanization die to be used next therein.

Also, at each of the vulcanization systems 100, four units of mobile vulcanization units 113 reciprocated and displaced between each of the four vulcanization stations 111 and the mold opening / closing station 112 are provided. Fig. 11 shows a state where among these four units of the mobile vulcanization units 113, only the mobile vulcanization unit 113 corresponding to the vulcanization station 111 immediate right of the left vulcanization system 100 is displaced to the side of the mold opening / closing station.

On the side of the mold opening / closing station 112 opposite to the region with respect to the straight line L where the vulcanization station 111 is arranged, a tire transfer device 114 is provided for the mold opening closing station for taking out a cured tire from the mold opening/closing station 112 or inputting an uncured tire thereinto. At the mold opening/closing station 112, the tire is stored in the mold in the posture with its center axis perpendicular, and the tire transfer device 114 loads/unloads the tire to / from the mold opening/closing station 112 in this posture.

Also, within the operational range of this tire transfer device 114, a bladder attaching/detaching station 108 provided with a bladder attaching/detaching device 108a for attaching a bladder B to an uncured tire GT and removing the bladder B from a cured tire T and a loading/unloading station 118 are provided. At the loading/unloading station 118, an uncured tire stand 116 for temporarily storing the uncured tire GT before attachment of the bladder B and deliver it to the tire transfer device 114 and a cured tire stand 117 for receiving the cured tire T with the bladder removed from the tire transfer device 114 for temporary storage are arranged side by side, and between both stations 108 and 118, at least one or two units in the Fig. of manipulators 175 and 176 are disposed for delivering the tires GT and T to the respective stations 108 and 118.

In this Fig., the stands 116 and 117 are arranged adjacent to each other in the fore and aft direction on the same plane, but they can be arranged adjacent to each other in the up and down or the right and left direction. In either case, it is preferable that carrying-in of the uncured tire GT to the stand 116 and carrying-out of the cured tire T from the stand 117 are performed using a conveying means such as a belt conveyer or the like, not shown.

Also, it is preferable that, in addition to the above, a post-cure treatment station 115 is provided within a working region of the tire transfer device 114, and at this station 115, a post-cure inflator 115a for applying PCI treatment to the cured tire T including a bladder is disposed. The post-cure inflator 115a is constituted so that a tire can be supported at four points, respectively, and the tire is supported with its central axis horizontal to enable PCI treatment for four tires at the same time. Also, at the bladder attaching / detaching station 108, the uncured tire stand 116 and the cured tire stand 117, the tires are placed in the posture with their central axis perpendicular.

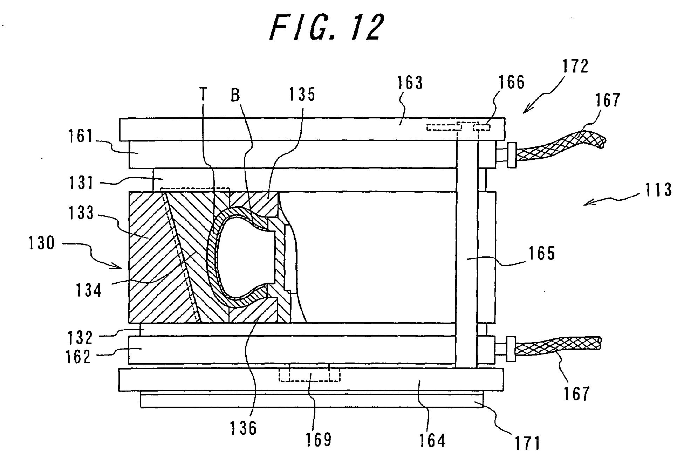

Each of the vulcanization stations 111, the mold opening / closing station 112 and the mobile vulcanization unit 113 reciprocated and displaced between them constituting this vulcanization system 100 will be explained. Fig. 12 shows a side view showing the mobile vulcanization unit 113. This mobile vulcanization unit 113 is provided with a vulcanization mold 130 for housing the tire T and the bladder B specifying the internal shape of the tire T in a cavity.

The vulcanization mold 130 is provided with an upper mold 131, a lower mold 132 and a container 133 to form in combination the cavity for housing the tire T and is capable of loading/unloading the tire by separating them from each other in the vertical direction. And the lower mold 132 is provided with a lower side mold 136 corresponding to one side portion of the tire, while the upper mold 131 is provided with a plurality of segment molds 134 in the annular state, which is movable in the radial direction in combination with an upper side mold 135 corresponding to the other side portion of the tire in the circumferential direction so as to form the outer shape of the tire tread portion.

Moreover, at the mobile vulcanization unit 113, an upper platen 161 and a lower platen 162 are provided to be brought into contact with both end surfaces (vertical end surfaces) of this vulcanization mold 130 to constitute a heating platen portion, and a heat medium supply hose 167 is connected to each of the platens 161 and 162 for supplying a heat medium, which is steam, for example, to a heat medium jacket provided inside these platens 161 and 162 so as to heat these platens 161 and 162. This heat is transferred to the vulcanization mold 130 in contact to vulcanize the tire.

Furthermore, the mobile vulcanization unit 113 is provided with an upper end plate 163 and a lower end plate 164 for integrally holding the vulcanization mold 130 and the respective platens 161 and 162 in contact with its both end surfaces between them and has a plurality of tie rods 165 for connecting these end plates 163 and 164 to each other and a hydraulic jack 169 mounted on the lower end plate 164 for pressing the vulcanization mold 130 onto the upper end plate 163 so as to fasten the vulcanization mold 130. These end plates 163, 164, the tie rods 165 and the hydraulic jack 169 work in cooperation to constitute a die lock means for integrally fastening the vulcanization mold 130 and the upper and the lower platens 161 and 162.

Also, the lower tip end of the tie rod 165 is fixed to the lower end plate 164 and the upper tip end of the tie rod 165 is engaged with the upper end plate 163 through a tie plate 166 and the tie plate 166 is constituted so that the tie rod 165 can be engaged with the upper end plate 163 or this engagement can be released by oscillating this tie plate 166 around the shaft center of the vulcanization die.

The upper mold 131, the upper platen 161, the upper end plate 163 and the tie plate 166 constitute an elevation unit part 172 moved integrally when the upper end plate 163 is hoisted up.

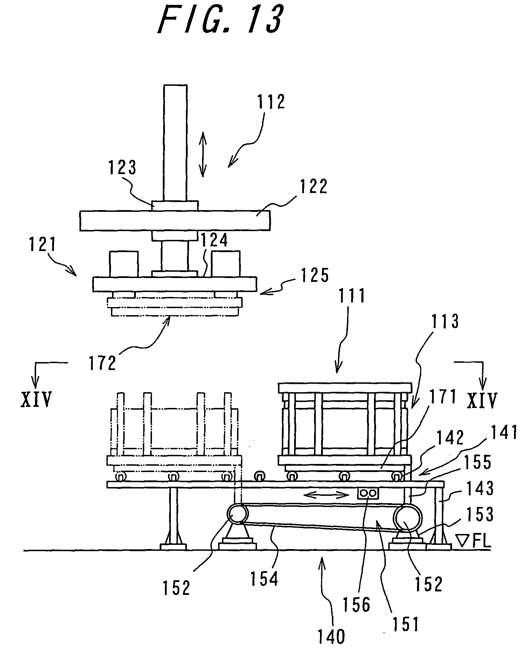

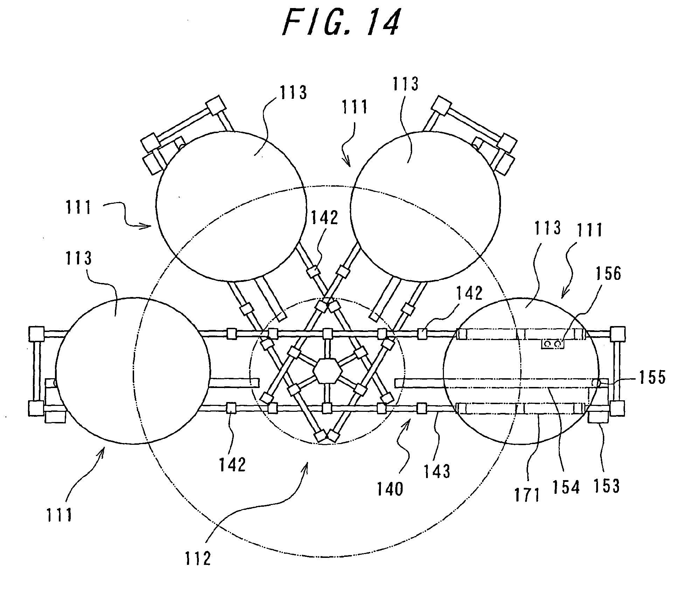

Next, the vulcanization station 111 and the mold opening/closing station 112 will be explained. Fig. 13 is a front view showing one of the mold opening/closing stations 112 of each of the vulcanization systems 100 in Fig. 11 and one of the vulcanization stations 111 provided opposite to it, and Fig. 14 is a plan view seen from the arrow XIV-XIV in Fig. 13, in which all the four units of the vulcanization stations 111 arranged around the mold opening / closing station 112 are shown.

Each of the vulcanization stations 111 has a heat medium supply port 156 for supplying the heat medium and is provided with a vulcanization unit reciprocatory driving device 140 for reciprocating and displacing the mobile vulcanization unit 113 between this vulcanization station 111 and the mold opening / closing station 112.

This vulcanization unit reciprocatory driving device 140 is comprised by a vulcanization unit driving part 151 and a vulcanization unit support guide part 141, and the vulcanization unit driving part 151 is provided with a driving bar 155 fixed to one link of a link chain 154 extended between two sprockets 152 and driven by a motor 153. The tip end of the driving bar 155 can be detachably connected to the last portion of the mobile vulcanization unit 113, that is, a portion located opposite to the mold opening / closing station 112 by a connecting means, not shown, and by driving the motor 153 to reciprocate and displace the link chain 154, the mobile vulcanization unit 113 can be reciprocated and displaced.

The vulcanization unit support guide part 141 is provided with a plurality of rollers 142 and a roller mounts 143 supporting them, and these rollers 142 are arranged in two rows between the corresponding vulcanization station 111 and the mold opening/closing station 112 in parallel with the straight line connecting them to each other. In the meantime, on the lower face of the mobile vulcanization unit 113, two guide rails 171 are mounted in parallel with its travel direction, and by moving these guide rails 171 on the corresponding row of rollers 142 along this row, the mobile vulcanization unit 113 can be reciprocated and displaced with respect to the mold opening / closing station 112.

As mentioned above, by constituting the vulcanization unit support guide part 141 of the vulcanization unit reciprocatory driving device 140 with the rollers 142 with short shafts laid in the movement section of the mobile vulcanization unit 113, as shown in Fig. 11, the tire vulcanization system 100 which is extremely simple and low-cost can be realized.

Moreover, as shown in Fig. 11, they can be provided even at the mold opening/closing station 112 and its vicinity where the vulcanization unit reciprocatory driving devices 140 provided at the respective vulcanization stations 111 cross each other so that the vulcanization unit support guide parts 141 or the vulcanization unit support guide part 141 and another mobile vulcanization unit 113 do not interfere with each other.

Also, in movement of the mobile vulcanization unit 113, since the vulcanization unit 113 can be moved with the heat medium supply hose 167 for supplying the heat medium from the heat medium supply port 156 connected to the upper and the lower platens 161 and 162 of the mobile vulcanization unit 113, vulcanization can be continued even during movement of the mobile vulcanization unit 113. By making use of this movement time as a part of vulcanization time to the maximum, the cycle time can be reduced for that portion and moreover, equipment costs can be lowered and a risk of leakage of the heat medium from the connection part can be decreased.

The mold opening/closing station 112 is, as shown in Fig. 13, provided with a mold opening closing device 121 at its center for elevating the elevating unit part 172 of the mobile vulcanization unit 113 which has been moved. This mold opening/closing device 121 is provided with a base 122 fixed through a column stood from the floor surface and a vertical unit 124 guided by a guide 123 mounted to this base 122 and vertically moved by a driving device, not shown. This vertical unit 124 is provided with an elevation unit part lock gripping mechanism 125 for connecting or separating the upper end plate 163 and the tie rod 165 by rotating the tie plate 166 of the mobile vulcanization unit 113 as well as for gripping or releasing the grip of the upper end plate 163.

In this tire vulcanization system 3, after the uncured tire GT is received from the molding system 2 and cured in synchronization with the molding system 2, the cured tire T is ejected to an inspection system 6 for conducting inspection of the tire in synchronization with these systems 2 and 3. A series of operations from reception of the uncured tire GT to ejection of the cured tire T will be explained referring to the above Fig. 11.

The uncured tire GT conveyed from the previous process is loaded onto the uncured tire stand 116. After this uncured tire GT is transferred to the bladder attaching / detaching station 108 by the manipulator 175, the bladder B is attached inside the uncured tire GT at the bladder attaching detaching station 108, and then, by the tire transfer device 114, the uncured tire GT with the bladder B attached is transferred to the mold opening/closing station 112. Since the mobile vulcanization unit 113 after the cured tire T had been removed has been standing by at the mold opening/closing station 112 with its vulcanization mold 130 open at this time, the uncured tire GT is set onto this vulcanization mold 130.

After the tire transfer device 114 is retreated from the mold opening/closing station, the mold opening/closing device 121 is lowered, the elevation unit part 172 of the mobile vulcanization unit 113 is lowered, and the elevation unit part lock gripping mechanism 125 and the hydraulic jack 169 are operated so as to lock the elevation unit part 172 with the other portions of the mobile vulcanization unit 113.

After that, this mobile vulcanization unit 113 is moved to the vulcanization station 111 by the vulcanization unit reciprocatory driving device 140 so as to vulcanize the uncured tire GT stored therein at the vulcanization station 111. When the vulcanization is completed, the mobile vulcanization unit 113 is moved to the mold opening/closing station 112 by the vulcanization unit reciprocatory driving device 140, and the vulcanization mold 130 is released by the mold opening / closing device 121 of the mold opening/closing station 112 so that the cured tire T can be taken out thereof.

After that, this cured tire T is transferred to the post-cure station 115 from the mold opening/closing station 112 using the tire transfer device 114, and PCI treatment is applied to this tire at the post-cure station 115. After the PCI treatment is completed, the cured tire T is removed by the tire transfer device 114 again from the post-cure station 115 and transferred to the bladder attaching/detaching station 108.

At the bladder attaching / detaching station 108, the bladder is removed from the cured tire T to which the bladder has been attached, and this tire T is loaded on the cured tire stand 117 using the manipulator 176.

In the above-mentioned vulcanization system 3, a function to vulcanize tires, a function to open/close the vulcanization mold 130, and a function to attach/detach the bladder to/from the tire are provided in distribution to each of separate stations so as to improve operation rates of each function, but the vulcanization system 3 can be constituted by the one having these functions altogether at the vulcanization station. Also, in this preferred embodiment, the vulcanization station is arranged on the arc with the mold opening/closing station at the center, but another arrangement such as vulcanization stations in the linear state, for example, is allowed.

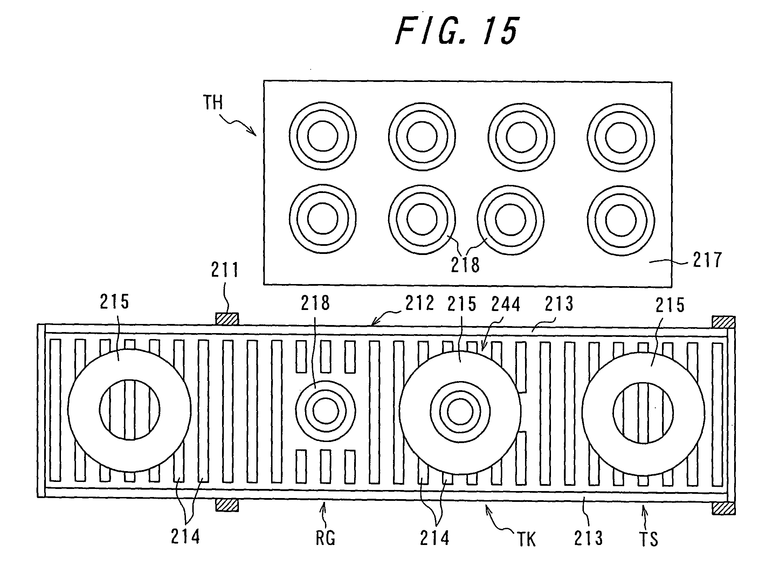

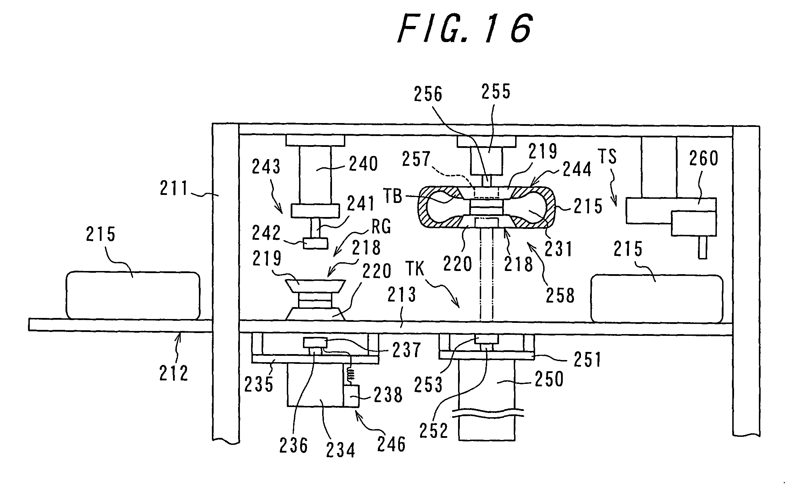

The tire T cured in the above vulcanization system 3 is then conveyed to a tire inspection system 6 as shown in Figs. 15 and 16 by a conveyer 201 from the cured tire stand 117.

In Figs. 15 and 16, 211 is a fixed frame, and on this fixed frame 211, a roller conveyer 212 as a horizontal conveying means extending in the right and left direction is mounted, and this roller conveyer 212 has a conveyer frame 213 extending in the longitudinal direction (right and left direction) and a large number of rollers 214 rotatably supported by the conveyer frame 213 and separated with an equal distance in the longitudinal direction and extending in the fore and aft direction. And a tire to be inspected 215, which is a cured pneumatic tire T conveyed on this roller convener 212 in the horizontal state, is conveyed from left to right in Fig. when the rollers 214 are driven and rotated by a rotating mechanism, not shown.

A storage station TH is provided behind the roller conveyer 212, and a horizontal storage stand 217 is provided at this storage station TH. On this storage stand 217, a plurality of rims 218 are loaded for holding the tire to be inspected 215 when inspecting the tire to be inspected 215, and each of the rims 218 is comprised by a one-side rim 219 and the other side rim 220 in almost the ring state superimposed vertically in close contact.

And when the one side rim 219 is attached to a one-side bead portion TB of the tire to be inspected 215 and the other side rim 220 to the other side bead portion TB, respectively, and these one side and the other side rims 219 and 220 are connected to each other by a connecting means, not shown, a sealed space 231 is formed between the tire to be inspected 215, the one side and the other side rims 219 and 220, and an internal pressure (air) is filled in or exhausted from this space 231.

RG is a rim assembling station provided in the middle of the roller conveyer 212, and at this rim assembling station RG, a vertically extending cylinder 234 is provided, which cylinder 234 is arranged immediately below the roller conveyer 212 and mounted to the conveyer frame 213 of the roller conveyer 212 through a bracket 235. A gripping mechanism 237 is provided at the tip end of a piston rod 236 of the cylinder 234, and when this gripping mechanism 237 is inserted into the other side rim 220, it can grip the other side rim 220 from inside. Also, when this gripping mechanism 237 grips the other side rim 220, air supplied from an air source 238 can be filled in the space 231.

A vertically extending cylinder 240 is provided immediately above the cylinder 234, and the head-side end (upper end) of this cylinder 240 is fixed to the fixed frame 211. A gripping mechanism 242 is provided at the tip end of a piston rod 241 of this cylinder 240, and when this gripping mechanism 242 is inserted into the one side rim 219, it can grip the one side rim 219 from inside.

And at this rim assembling station RG, by protrusion of the piston rods 236 and 241 of the cylinders 234 and 240, the other side and the one side rims 220 and 219 gripped by the gripping mechanisms 237 and 242 are brought close to and attached to the other side and the one side bead portions TB of the tire to be inspected 215, respectively. The above cylinder 234, the gripping mechanism 237, the cylinder 240 and the gripping mechanism 242 constitute as a whole an attaching means 243 for bringing close the one side rim 219 to the one side bead portion TB and the other side rim 220 to the other bead portion TB, respectively, of the tire to be inspected 215 for attachment. When the one side rim 219 is attached to the one side bead portion TB of the tire to be inspected 215 and the other side rim 220 to the other side bead portion TB, respectively, in this way, these one side and the other side rims 219 and 220 are attached firmly to each other and connected to each other by the connecting means, whereby a rim/tire assembly 244 is formed.

When the rim/tire assembly 244 is formed in this way by rim assembling, air is supplied from the air source 238 into the space 231, and the space 231 is filled with the internal pressure. When the gripping mechanism 237 releases the gripping of the other side rim 220, outflow of the internal pressure from the space 231 is blocked. The above air source 238 and the gripping mechanism 237 constitute a filling means 246 as a whole for filling the internal pressure between the tire to be inspected 215 and the one side and the other side rims 219 and 220 during the period from formation of the rim/tire assembly 244 to conveying of the rim/tire assembly 244 to an inspecting station TK, which will be described later. A trimming means may be provided at this inspecting station TK.

TK is an inspecting station provided on the right (downstream side) of the rim assembling station RG, and at this inspecting station TK, a vertically extending cylinder 250 is provided, which cylinder 250 is arranged immediately below the roller conveyer 212 and mounted to the conveyer frame 213 of the roller conveyer 212 through a bracket 251. A rotatable gripping mechanism 253 is provided at the tip end of a piston rod 252 of the cylinder 250, and when this gripping mechanism 253 is inserted into the other side rim 220, it can grip the other side rim 220 from inside. Also, when this gripping mechanism 253 grips the other side rim 220, the internal pressure (air) in the space 231 can be exhausted.

Also, a vertically extending motor 255 is provided immediately above the cylinder 250, and the upper end of this motor 255 is fixed to the fixed frame 211. A gripping mechanism 257 is provided at the tip end of a rotating shaft 256 of this motor 255, and when this gripping mechanism 257 is inserted into the one side rim 219, it can grip the one side rim 219 from inside. And at this inspecting station TK, when the gripping mechanism 257, the rim/tire assembly 244 and the gripping mechanism 253 are rotated integrally by operation of the motor 255, a predetermined inspection, an appearance inspection, a uniformity inspection, etc., for example, is conducted for the tire to be inspected 215 by a tire inspecting means, not shown (a CCD camera for taking a picture of the tire to be inspected 215, an image processing device for processing the image taken by the CCD camera so that features are made clear and a usual computer for performing inspection from the images of the tire to be inspected 215 after image processing, for example). Moreover, this tire inspecting means (the above computer, for example) compares the inspection result with threshold values set as an upper and a lower limits of the inspection result of a conventional accepted product, for example, and evaluates it as nonconformity when the inspection result does not fall between the upper and the lower limit threshold values.

The cylinder 250, the gripping mechanism 253, the motor 255, the rotating shaft 256, the gripping mechanism 257 and the tire inspecting means have as a whole the rotating shaft 256 connected to the rim / tire assembly 244 and constitute a tire inspector 258 for inspecting the tire to be inspected 215 by integrally rotating the rotating shaft 256 and the rim/tire assembly 244.

TS is a post-treatment station provided on the right (downstream side) of the inspecting station TK, and at this post-treatment station TS, a post-treatment machine 260 is provided for conducting marking, inner-surface inspection, etc. for the tire to be inspected 215, for example, and this post-treatment machine 260 is mounted to the fixed frame 211 immediately above the roller conveyer 212. And at this post-treatment station TS, when the tire to be inspected 215 having been removed from the rim 218 is conveyed from the inspecting station TK, post treatment is given for the tire to be inspected 215.

Next, action of this tire inspection system 6 will be explained. When the rim 218 corresponding to the tire to be inspected 215 to be inspected is conveyed from the storage station TH to the rim assembling station RG by a transfer means, the piston rods 236 and 241 of the cylinders 234 and 240 are protruded, the gripping mechanisms 237 and 242 are inserted into the other side and the one side rims 220 and 219, and then, these gripping mechanisms 237 and 242 grip the other side and the one side rims 220 and 219 from inside, respectively. At this time, the transfer means returns to the initial position after releasing the gripping of the one side and the other side rims 219 and 220. Then, the piston rods 236 and 241 of the cylinders 234 and 240 are retreated together, and when the other side rim 220 is moved below the roller conveyer 212 and the one side rim 219 to above the upper surface of the tire to be inspected 215, the rollers 214 of the roller conveyer 212 are rotated and the tire to be inspected 215 is conveyed to the rim assembling station RG.

After that, since the piston rods 236 and 241 of the cylinders 234 and 240 are protruded, the other side and the one side rims 220 and 219 gripped by the gripping mechanisms 237 and 242 are brought closer and attached to the other side and the one side bead portions TB of the tire to be inspected 215, respectively. At this time, the upper and the lower surfaces of the one side and the other side rims 219 and 220 are attached firmly to each other and these one side and the other side rims 219 and 220 are connected to each other by the connecting means to form the rim/tire assembly 244.

Then, air is supplied from the air source 238 into the space 231 to fill the space 231 with the internal pressure. If the space 231 is filled with the internal pressure during the period from formation of the rim / tire assembly 244 to conveying of the rim/tire assembly 244 to the inspecting station TK in this way, a preparation work as internal pressure filling can be performed at the pre setup of the inspecting work, which can improve working efficiency.

And in the state where the space 231 is filled with the internal pressure, while standing by till the inspected tire 215 is conveyed from the inspecting station TK to the post-treatment station TS, a method for having the one side and the other side rims 219 and 220 adapted to the tire to be inspected 215 is used to improve rim fitting performance. By this, warming up for inspection can be conducted at the pre-setup, which can improve working efficiency.

Next, immediately before start of conveyance of the tire to be inspected 215 at the inspecting station TK, the one side and the other side rims 219 and 220 are released from gripping by the gripping mechanisms 242 and 237, and the gripping mechanisms 242 and 237 are returned to the initial position by retreating the piston rods 241 and 236 of the cylinders 240 and 234. At this time, since outflow of the internal pressure from the space 231 is prevented, inspection of the tire to be inspected 215 at the subsequent inspecting station TK is conducted accurately.

Next, the rim/tire assembly 244 filled with the internal pressure is conveyed from the rim assembling station RG to the inspecting station TK and the inspected tire 215 from the inspecting station TK to the post-treatment station TS at the same time by operation of the roller conveyer 212. When the rim/tire assembly 244 is conveyed to the inspecting station TK in this way, the piston rod 252 of the cylinder 250 is protruded and the gripping mechanism 253 is inserted into the other side rim 220, and then, the gripping mechanism 253 grips the other side rim 220 from inside. Then, when the piston rod 252 of the cylinder 250 is further protruded, the rim/tire assembly 244 is raised till the gripping mechanism 257 is inserted into the one side rim 219, while at this time, the gripping mechanism 257 grips the one side rim 219 from inside.

After that, when the motor 255 is operated, the gripping mechanism 257, the rim / tire assembly 244 and the gripping mechanism 253 are rotated integrally, and during this rotation, a predetermined inspection such as an appearance inspection, a uniformity inspection, etc., for example, is conducted for the tire to be inspected 215 by the above tire inspecting means, not shown, and moreover, the above evaluation is made by the above tire inspecting means based on the inspection results.

At the rim assembling station RG which is separate from the inspecting station TK where the tire inspecting machine 258 is placed as mentioned above, by performing rim assembling of the one side and the other side rims 219 and 220 and the tire to be inspected 215 at the pre-setup, the rim/tire assembly 244 is formed and at the inspection, the rim/tire assembly 244 is conveyed from the rim assembling station RG to the inspecting station TK (tire inspecting machine 258), and the time for preparation work at the tire inspecting machine 258 is made shorter to reduce the cycle time, which can improve the working efficiency.

When inspection of the tire to be inspected 215 is completed in this way, after the internal pressure (air) in the space 231 is exhausted, connection between the one side and the other side rims 219 and 220 is released by the connecting means. Then, only the other side rim 220 gripped by the gripping mechanism 253 and the tire to be inspected 215 are lowered by retreating the piston rod 252 of the cylinder 250 so that the inspected tire 215 is loaded onto the roller conveyer 212. Then, after the other side rim 220 is released from gripping by the gripping mechanism 253, the gripping mechanism 253 is removed downward from the other side rim 220 by retreating the piston rod 252.

Next, the inspected tire 215 is conveyed from the inspecting station TK to the post-treatment station TS by rotating the rollers 214 of the roller conveyer 212, and post treatment as marking is applied to the inspected tire 215 by the post-treatment machine 260 at the post-treatment station TS. At this time, at the inspecting station TK, after the other side rim 220 is raised to be in close contact with the one side rim 219 by protrusion of the piston rod 252 of the cylinder 250, the transfer means grips these one side and the other side rims 219 and 220, while the gripping mechanisms 253 and 257 release the other side and the one side rims 220 and 219 from gripping. After that, when the piston rod 252 is retreated, the transfer means transfers the rim 218 to the storage station T (on the storage stand 217).

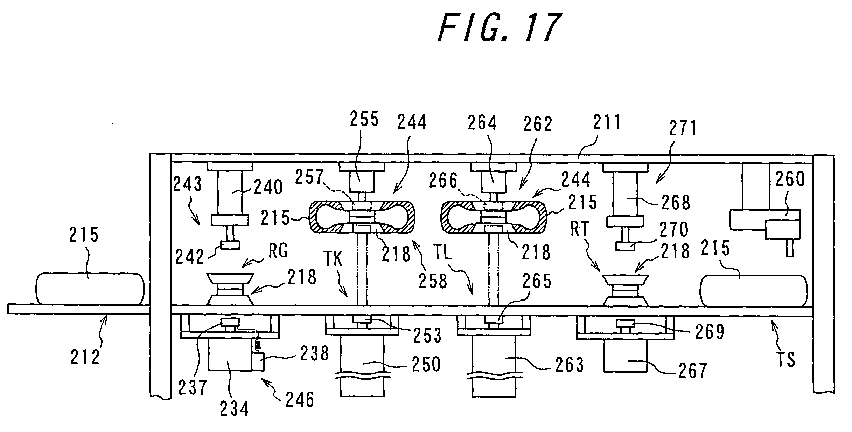

Fig. 17 is a view showing another example of the tire inspection system 6. In this example, an inspection station TL for conducting an inspection different from that at the inspecting station TK such as a balance inspection, for example, is provided between the inspecting station TK and the post-treatment station TS, and a rim disassembling station RT for removing the rim 218 from the inspected tire 215 is provided between the inspecting station TL and the post-treatment station TS. Here, at the inspecting station TL, a cylinder 263, a motor 264 and gripping mechanisms 265 and 266 in the same constitution as in the inspecting station TK are provided, and a tire inspecting means such as a balance inspecting machine (not shown) is provided. And the rim/tire assembly 244 for which inspection has been finished at the inspecting station TK is conveyed as it is to this inspecting station TL by the roller conveyer 212, and inspection is conducted in the same way as for the inspection at the inspecting station TK.

By arranging the tire inspecting machines 258 and 262 for conducting different kinds of inspections respectively at the plurality of inspecting stations TK and TL and by sequentially conveying the rim / tire assembly 244 to these tire inspecting machines 258 and 262 for inspection, equipment at the rim assembling station RG can be shared, which promotes space and energy saving for the equipment.

In the meantime, at the rim disassembling station RT, a rim disassembling means 271 made of cylinders 267 and 268 and gripping mechanisms 269 and 270 is placed as in the rim assembling station RG. And at this rim disassembling station RT, when the inspected tire 215 which has been inspected at the inspecting station TL is conveyed by the roller conveyer 212, the other side and the one side rims 220 and 219 are gripped by the gripping mechanisms 269 and 270 and then, the internal pressure (air) in the space 231 is exhausted and after that, connection between the one side and the other side rims 219 and 220 is released by the connecting means.

Next, by lowering the gripping mechanism 269 and the other side rim 220 through operation of the cylinder 267 and by raising the gripping mechanism 270 and the one side rim 219 through operation of the cylinder 268, the rim 218 is separated from the inspected tire 215 for rim disassembling. After that, the inspected tire 215 is conveyed to the post-treatment station TS by the roller conveyer 212, while the cylinders 267 and 268 are operated so as to raise/lower the other side rim 220 and the one side rim 219, respectively, till they are brought into close contact. After that, the transfer means grips these one side and the other side rims 219 and 220, while the gripping mechanisms 269 and 270 release the other side and the one side rims 220 and 219 from gripping, when the transfer means transfers the rim 218 onto the storage stand 217.

If the rim/tire assembly 244 for which inspection has been finished by the tire inspecting machines 258 and 262 is conveyed to the rim disassembling station RT, the internal pressure is exhausted at the rim disassembling station RT and the one side and the other side rims 219 and 220 are removed from the inspected tire 215 in this way, a clean-up work such as exhaustion of internal pressure and rim disassembling can be performed at a stage separate from the inspection work, which can further improve the working efficiency.

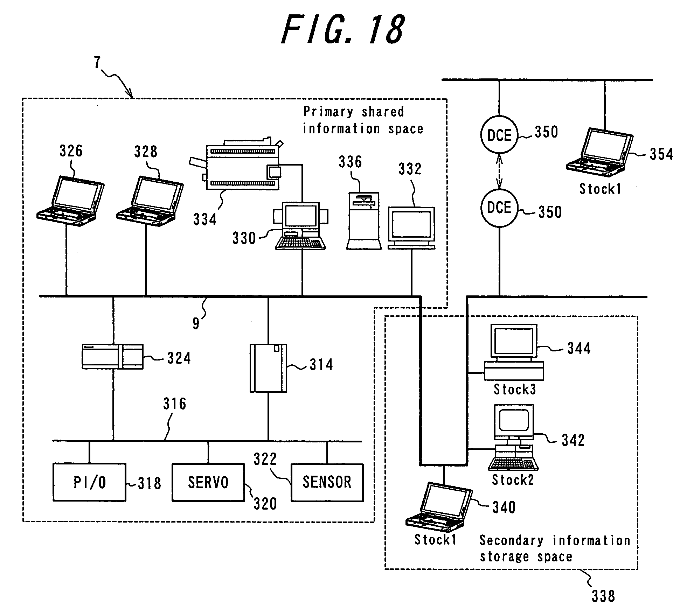

Then, based on Fig. 18, a tire production evaluation managing system 7 according to the above preferred embodiment of the present invention will be described. Fig. 18 is a constitutional diagram of the flow-oriented type tire production evaluation managing system 7 according to the above preferred embodiment.

The tire production evaluation managing system 7 of this preferred embodiment is provided with, as shown in Fig. 1, a LAN (local area network) 9 passing the vicinity or inside of each of the tire molding system 2, the tire vulcanization system 3, the tire inspection system 6 and a centralized control chamber 8, and in this preferred embodiment, the LAN 9 will be described as a loop type network, but this network form is not limited to this loop type but it may be another form such as a bus type, a star type, a mesh type, a root type, etc.

As shown in Fig. 18, a sequencer 314 is connected to the LAN 9, and this sequencer 314 controls transaction of signals between a bus line 316 with each of the tire molding system 2, the tire vulcanization system 3 and the tire inspection system 6, and the LAN 9. The sequencer 314 stores a sequence program per production process (or segmented processes classified in the same production process) and inspection process, and each process is controlled by this sequence program.

At each process, a PI / O 318, a servo (SERVO) 320 and a sensor (SENSOR) 322 are connected to the bus line 316, and each instrument is operated upon reception of an instruction from the sequencer 314.

Also, between the LAN 9 and the bus line 316 of each process, a router 324, which is a relay device for promoting transmission of information is interposed so that data of field information such as state of operation of each instrument, measured values of a product, etc, is transmitted to the LAN 9 all the time.

To the LAN 9, a plurality of terminals (DTE) 326, 328 and 330 placed in the centralized control chamber 8 are connected as evaluating means, and their function is mainly to monitor each process (production, operation information, quality, QA information, process / control information, trouble information) through access to a server computer 332, which will be described later, and the monitoring is performed by management of predetermined quality data.

The management of predetermined quality data can be represented as follows:
(1) To collect specific sizes for comparison;
(2) To collect by product group for comparison;
(3) To collect by machine for comparison;
(4) To collect by shift for comparison;
(5) To collect specific sizes by operator for comparison;
(6) To compare data before and after process improvement;
(7) To evaluate data before and after machine improvement;
(8) To compare data before and after change of working method;
(9) To grasp quality abnormality value in a certain period by % or number of units;
(10) To grasp quality situation at startup of machine equipment;
(11) To compare differences between lot; and
(12) To grasp time series change in a lot.

From a printer 334 placed in the centralized control chamber 8 and connected to the terminal 330, trend graphs, bar charts, circle graphs, comparison tables, raw information lists, etc. are outputted (printed out) based on the above quality data.

Also, capturing, processing and storage of information to prepare the above quality data is performed by the server computer 332 placed in the centralized control chamber 8, and each of processing information is also stored in lump sum in a server 336 placed in the centralized control chamber 8. And this server computer 332 can make an access to each of the terminals 326, 328 and 330 connected to the LAN 9.

The above is a system based on a client-server model, and as mentioned above, a large amount of raw data is not stored there but predetermined quality data (processed data) is stored as shared data.

Since such shared data is the data already processed, despite its advantage that it is suitable as data for long-term storage, it has a disadvantage that raw information required for improvement can not be taken out.

Then, in this preferred embodiment, the above system is defined as a primary shared information space, and a group of storage devices allowing duplicated storage called as stock is newly defined as a secondary information storage space.

That is, the primary shared information space shared by the whole system is designed first, and then, a system is constructed based of a so-called two-storied information space designing method (flow oriented system) designing a stock as necessary.

In order to realize this system, it is necessary to send raw information (field information data) from each of the production processes to the LAN 9 all the time as mentioned above.

As shown in Fig. 18, three terminals 340, 342 and 344 as a data collecting means distinguished by a frame 338 as the secondary information storage space are placed in the centralized control chamber 8 and classified as a stock 1, a stock 2 and a stock 3, respectively. The terminal 340 as the stock 1 is suitable for short-term (instantaneous) storage and used for early discovery of the cause of a trouble at occurrence of the trouble (nonconformity) and when urgent improvement is necessary.

The terminal 342 as the stock 2 functioning as a data joining means is suitable for medium-term storage and used when limited data caused by the trouble is needed during an unstable period from temporary trouble shooting to permanent trouble shooting, for example, that is, a period which can not expected in advance.

And the terminal 344 as the stock 3 functioning also as a data joining means is suitable for long-term storage and used for adding processed data which can not be expected at first separately from programming of the server computer 322 without affecting it when necessary, in order to handle ever-changing needs in the manufacturing industry.

Action of this preferred embodiment will be described below. Any of the terminals 326, 328 or 330 evaluates that a trouble (nonconformity) occurs during operation of each of the working stations at the tire molding system 2 or the tire vulcanization system 3 and outputs an alarm signal based on data of inspection results or test results outputted to the LAN 9 from equipment of any of the tire molding system 2, the tire vulcanization system 3 or the tire inspection system 6, a production manager or the like rushes to the field to investigate the cause of the trouble. For this cause investigation, data has been collected from the server 336 of the server computer 332 to determine what change is observed at which process at what point in time. If judgment can be made from the data from this server 336, there is no problem, but if not, data should be newly collected in the field.

When a width dimension or the like of a green tire is needed, for example, though the numeral values have been inputted in the server computer 332, it was necessary to directly measure the numeral values in the field by placing a new sensor instead of designing software or branching from a signal line of an existing sensor since a large number of processes were needed for new creation or remodeling of software for access.

However, in this preferred embodiment, since all the raw information (field information) is sent to the LAN 9 all the time, it is possible to directly access the LAN 9 to take in necessary raw information. And not only that work in the field is not necessary but required information can be obtained even away from the field.

For such data management requiring emergency, the terminal 340 of the stock 1 is applied. That is, since a large data amount is not needed, a data management software program in the market is applied, and the terminal 340 of the stock 1 chooses and collects the raw information (field information) corresponding to the production process with nonconformity from the field information data flowing through the LAN 9 according to the program and creates new processing information based on the raw information (in the above case, a change rate of meandering degree of a stamping member obtained from the width dimensional data). By this, a measure such as reduction of the meandering degree by temporarily disposing a guide plate, for example, can be obtained quickly. The server computer 332, the server 336 and the LAN 9 can temporarily store and supply (send) field information data from the molding process to the vulcanization process of the tire in the middle of production till the inspection of the cured tire with the same specification of the tire in the middle of production is finished and its evaluation is given.

Also, by applying the terminal 340 of the stock 1, following measures can be taken in relation with the above new tire production method for the evaluation results by the terminals 326, 328 and 330. That is, regarding uniformity balance improvement (control in the circumferential direction) of the tire, for example, the following measures can be taken immediately:
a. To increase an overlapping amount of small pieces of the inner liner in the portion opposite to the deteriorated portion by 180 degrees;
b. To increase an overlapping amount of narrow pieces of the carcass member in the portion opposite to the deteriorated portion by 180 degrees;
c. To change start/end position of stamping;
d. To change a rubber amount of a rubber ribbon on the tread portion;
e. To partially change a cord path of the carcass between beads; or
f. To partially change thermal history by the vulcanization process (See JP-A2000-280264, for example).

Also, regarding conicity improvement (width direction control or belt angle control) of the tire, the following measures can be taken immediately:
a. To give an offset amount of a belt according to the conicity level;
b. To give an offset amount of a spiral according to the conicity level; and
c. To change a rubber ribbon volume (overlapping amount or rubber amount of the rubber ribbon) of a tread portion according to the conicity level.

Moreover, regarding cord open (nonconformity of cord interval) of the carcass, for example, a measure such as increase of an overlapping amount of narrow pieces of the carcass member where the interval is large can be taken immediately.

Moreover, regarding irregularity on the tire surface, for example, a measure such as change of rubber ribbon volume of the irregularity portion on the tread portion (overlapping amount or rubber amount of the rubber ribbon) or change of pressure at vulcanization can be taken immediately.

And regarding air mixture into layers found by sialo (test for detecting deformation of a portion with air at pressure reduction using sialograph images), a measure such as bending of the portion with air of the green tire by drilling, increase in stetcher roll pressure of the portion with air of the green tire or increase of the number of stetcher rolling times can be taken immediately.

What is needed next is data for the unstable period from temporary trouble shooting to permanent trouble shooting. In this case, the medium-term storage is required, and the terminal 342 of the stock 2 is applied.

At the terminal 342 of the stock 2, more types and quantity of raw information than those of the terminal 340 of the stock 1 is required. That is, even if the direct cause is meandering of the stamping member, pursuit of an indirect cause such that this meandering is caused by inappropriate temperature control in the previous process becomes necessary.

Therefore, a limited element to link the current process to the previous process (raw information) is needed, and the need of such information cannot be expected at the beginning of programming of the server computer 332. Thus, it cannot be handled by data stored in the server 336.

Since the terminal 342 of the stock 2 incorporates programs for information processing matching each production process, it can create new processing information by preparing a relatively large amount of data and linking them to a plurality of processes for joining those data.

By this, taking the above measures against meandering as an example, a permanent measure such as decrease of the temperature control threshold value in the previous process by X % to eliminate deformation due to uneven temperature and to solve meandering can be determined quickly and accurately.

The terminal 344 of the stock 3 is applied for long-term management to determine whether each process is operating smoothly or not after the above permanent measure was taken. Such a measure cannot be expected at the beginning of the operation, and to incorporate it in a program of the server computer 332 in advance requires huge amount of time and labor, which is far away from a quick response.

On the other hand, it is only necessary to incorporate in the terminal 336 of the stock 3 a program to create new processing information based on raw information required for the current permanent measure by joining the raw information or the like, totally regardless of the server computer 332, by which a quick response can be taken.

Also, in the present manufacturing industry, since production of many types in small quantity is taken for granted and a product itself is changing, an improvement cycle of a work process is shortened and programming of the server computer 332 can not be changed to handle it in time to follow the cycle, which makes a big problem in production management. However, according to the flow oriented type system 7 in this preferred embodiment, such a cycle that is changing quickly can be sufficiently followed. Also, since each of the processing information is left in an independent form, processing information which is not necessary any more can be deleted at any time.

As mentioned above, according to the system 7 of this preferred embodiment, ever-changing request data can be obtained quickly and accurately, and because of its quickness, even at emergency such as occurrence of trouble, improvement can be made without delay, and yield of products can be improved.

Also, since required raw information can be obtained by remotely accessing the LAN 9 even not in the field, necessary data can be gained separately in each field of design, production management, manufacturing technologies, etc., it is not necessary to depend on a few system engineers who administers the server computer 332 any more.

Moreover, as shown in Fig. 18, all the factories in the country or the world can be controlled at one location in the centralized manner by connecting the LAN 9 to a telephone line through a DCE (data circuit-terminating equipment) 350.

In this preferred embodiment, all of the terminal 340 of the stock 1, the terminal 342 of the stock 2 and the terminal 344 of the stock 3 are placed in the centralized control chamber 8, but this is just for convenience. The terminals 340, 342 and 344 of the stocks 1 to 3 may be arranged anywhere only if they are connected to the LAN 9, and they can be removable. Also, the conventional terminals 326, 328 and 330 may be applied to the stocks 1 to 3.

Moreover, the above field information may include information of the physical distribution and sales fields.

### INDUSTRIAL APPLICABILITY

As obvious from the above, according to the present invention, in a factory provided with facilities for a plurality of production processes from materials to products such as a tire and a means for evaluating the products based on at least one of inspection and testing, a network connects the facilities in respective production processes with the evaluating means and when a result of at least one of inspection and testing exceeds a predetermined threshold value or the like, it is evaluated as nonconformity based on the evaluation result information of the product outputted by the evaluating means, a means for collecting data collects through the network field information data of the facility in a production process pertaining to the production of a product corresponding to the information of evaluation results of the product among a large amount of field information data outputted from the evaluating means to the network. Thus, when the nonconformity of the product is found from the evaluation result information based on at least one of inspection and testing of the product, the field information data of the facilities of the production process pertaining to the production of the product corresponding to the evaluation result information can be collected immediately, and by analyzing the field information data, a problem in the production process corresponding to the nonconformity found from the evaluation result information can be investigated immediately in a short time.

## Claims

1. A production evaluation managing system **characterized by** that, in a factory provided with facilities for a plurality of production processes from materials to products and a means for evaluating the products based on at least one of inspection and testing, comprising
a network connecting the facilities in respective production processes with the evaluating means and
a means for collecting through the network field information data of the facility in a production process pertaining to the production of a product corresponding to the information of evaluation results, based on the information of evaluation results of the products outputted from the evaluating means.

2. A production evaluation managing system **characterized by** that, in a factory provided with facilities for a plurality of production processes from materials to products and a means for evaluating the products based on at least one of inspection and testing and where the facilities of the plurality of production processes exist as a plurality of production lines, comprising
a network connecting the facilities in respective production processes with the evaluating means and
a means for collecting through the network field information data of the facility in a production process pertaining to the production of a product corresponding to the information of evaluation results, based on the information of evaluation results of the products outputted from the evaluating means.

3. A production evaluation managing system **characterized by** that, in a production system provided with facilities for a plurality of production processes from materials to products and a means for evaluating the products based on at least one of inspection and testing and where the facilities of the plurality of production processes exist as a plurality of production lines and the production lines are arranged in a plurality of factories, comprising
a network connecting the facilities in respective production processes with the evaluating means and
a means for collecting through the network field information data of the facility in a production process pertaining to the production of a product corresponding to the information of evaluation results, based on the information of evaluation results of the products outputted from the evaluating means.

4. A production evaluation managing system in any of claims 1 to 3, wherein a data joining means is provided for joining field information of the facilities of the respective production processes collected by the data collecting means.

5. A production evaluation managing system in any of claims 1 to 4, wherein, by the field information data collected by the data collecting means based on the information of the evaluation results of the products outputted by the evaluating means, production conditions on the facilities of the production process pertaining to the production of the product corresponding to the information of the evaluation result is changed.

6. A production evaluation managing system in any of claims 1 to 5, wherein the production process is a process for molding a pneumatic tire.

7. A production evaluation managing system in claim 6 wherein the production process is comprised by a process for molding a green tire that, when producing a product tire in plural sizes chosen from a predetermined group of sizes, the tire in the middle of molding is moved sequentially between stations of a molding system having a plurality of working stations and predetermined tire component members are sequentially assembled according to each of the working stations and a process for vulcanizing the molded green tire.

8. A production evaluation managing system in claim 6 or 7, wherein the production process has a process for forming a carcass band by assembling an inner liner member and a carcass member at respective corresponding working stations and a process for assembling a belt member, a tread member and a sidewall member at respective corresponding working stations.

9. A production evaluation managing system in any of claims 6 to 8, wherein at least one of the tire component members assembled at the working stations is comprised by a predetermined single type of member element common to the group of sizes and the production process has a process for molding a green tire by assembling the member element under a condition corresponding to each of the tire component member for all the sizes in the group.

10. A production evaluation managing system in any of claims 6 to 9, wherein at least one of the tire component members has a rubber ribbon of a predetermined material continuously extruded from a die with a predetermined sectional shape as the member element, and the production process has a process for assembling this tire component member by winding the rubber ribbon helically on a cylindrical or a toroidal molding drum and laminating it in a predetermined sectional shape.

11. A production evaluation managing system in any of claims 6 to 10, wherein the production process has a process to vulcanize a green tire.

12. A production evaluation managing system in any of claims 6 to 11, wherein the evaluating means outputs an evaluation result of a tire to be inspected through a process for forming a rim/tire assembly by attaching a one-side rim on a one-side bead portion and the other-side rim on the other-side bead portion of the tire to be inspected at a rim assembling station and by connecting these one-side and the other-side rims to each other, a process for conveying the rim/tire assembly to a tire inspecting machine placed at an inspection station, and a process for inspecting the tire to be inspected while rotating the rotating shaft and the rim/tire assembly once, after connecting the rim/tire assembly to a rotating shaft of the tire inspecting machine.

13. A production evaluation managing system in claim 12, wherein a tire inspecting machine for performing different types of inspection is arranged respectively at a plurality of inspection stations, and the evaluating means is to convey the tire to be inspected sequentially to the tire inspecting machine for performing the different types of inspection in the state of the rim / tire assembly.

14. A production evaluation managing method **characterized in that**, in a factory provided with facilities for a plurality of production processes from materials to products and a means for evaluating the products based on at least one of inspection and testing, when evaluating and managing the production system, the facilities of the respective production process has sent field information data to a network connecting the facilities of the respective production process with the evaluating means, and a means for collecting data selects and collects, based on information of evaluation results of the products outputted by the evaluating means, the field information data of the facilities of the production process pertaining to production of the product corresponding to the information of the evaluation results among the field information data sent through the network.

15. A production evaluation managing method **characterized in that**, in a factory provided with facilities for a plurality of production processes from materials to products and a means for evaluating the products based on at least one of inspection and testing and where facilities of the plurality of production processes exist as a plurality of production lines, when evaluating and managing the production process, the facilities of the respective production process has sent field information data to a network connecting the facilities of the respective production process with the evaluating means, and a means for collecting data selects and collects, based on information of evaluation results of the products outputted by the evaluating means, the field information data of the facilities of the production process pertaining to production of the product corresponding to the information of the evaluation results among the field information data sent through the network.

16. A production evaluation managing method **characterized in that**, in a production system provided with facilities for a plurality of production processes from materials to products and a means for evaluating the products based on at least one of inspection and testing and where facilities of the plurality of production processes exist as a plurality of production lines and the production lines are arranged in a plurality of factories, when evaluating and managing the production process, the facilities of the respective production process has sent field information data to a network connecting the facilities of the respective production process with the evaluating means, and a means for collecting data selects and collects, based on information of evaluation results of the products outputted by the evaluating means, the field information data of the facilities of the production process pertaining to production of the product corresponding to the information of the evaluation results among the field information data sent through the network.

17. A production evaluation managing method in any of claims 14 to 16, wherein the field information of the facilities of the respective production processes collected by the data collecting means is joined by a data joining means.

18. A production evaluation managing method in any of claims 14 to 17, wherein, by the field information data collected by the data collecting means based on the information of the evaluation results of the products outputted by the evaluating means, production conditions on the facilities of the production process pertaining to the production of the product corresponding to the information of the evaluation result is changed.
